# EUROPEAN PATENT SPECIFICATION

(11) **EP 4 446 039 B1**
(45) Date of publication and mention of the grant of the patent: **07.10.2026**
(21) Application number: 24197137.3
(22) Date of filing: 01.11.2021
(51) Int. Cl.: B29C 64/236, B29C 64/165, B29C 64/393

(54) **ADDITIVE MANUFACTURING APPARATUSES AND METHODS FOR OPERATING THE SAME**
VORRICHTUNGEN ZUR GENERATIVEN FERTIGUNG UND VERFAHREN ZUM BETRIEB DAVON
APPAREILS DE FABRICATION ADDITIVE ET PROCÉDÉS POUR FAIRE FONCTIONNER CEUX-CI

(30) Priority: 02.11.2020 US 202063108549 P
(43) Date of publication of application: 16.10.2024
(62) Document number(s) of the earlier application(s) in accordance with Art. 76 EPC: 21815035.7 / 4 237 227
(73) Proprietor: General Electric Company, Schenectady, NY 12345 (US)
(72) Inventor: BROMBERG, Vadim, Schenectady, 12345 (US); STERLE, John, Schenectady, 12345 (US); BONILLA, Carlos H., Schenectady, 12345 (US); PENDURTI, Srinivas, Schenectady, 12345 (US); ANDREWS, Timothy Francis, Schenectady, 12345 (US); FULTON, Victor, Schenectady, 12345 (US); MAYER, Jacob, Schenectady, 12345 (US)
(74) Representative: Hafner & Kohl PartmbB

(56) References cited:
- WO-A1-2019/089497
- WO-A1-2019/182618
- WO-A1-2020/237161

## Description

### Cross Reference To Related Applications

The present specification claims the benefit of U.S. Provisional Patent Application Serial No. 63/108,549 filed November 2, 2020 and entitled "Additive Manufacturing Apparatuses and Methods for Operating the Same".

### BACKGROUND

### Field

The present specification generally relates to additive manufacturing apparatuses and, more specifically, to additive manufacturing apparatus operations and methods for using the same. WO 2019/089497 A1 discloses an additive manufacturing apparatus.

### Technical Background

Additive manufacturing apparatuses may be utilized to "build" an object from build material, such as organic or inorganic powders, in a layer-wise manner. Early iterations of additive manufacturing apparatuses were used for prototyping 3 dimensional objects. However, as additive manufacturing technology has improved, there is an increased interest in utilizing additive manufacturing apparatuses for large-scale commercial production of objects. One issue of scaling additive manufacturing apparatuses to commercial production is improving the throughput of additive manufacturing apparatuses to meet commercial demands while maintaining and increasing machine reliability.

Accordingly, a need exists for alternative additive manufacturing apparatuses and components thereof that improve manufacturing throughput and reliability.

### SUMMARY

Present invention concerns an additive manufacturing apparatus according to the appended claims.

Additional features and advantages of the manufacturing apparatuses described herein, and the components thereof, will be set forth in the detailed description which follows, and in part will be readily apparent to those skilled in the art from that description or recognized by practicing the embodiments described herein, including the detailed description which follows, the claims, as well as the appended drawings.

It is to be understood that both the foregoing general description and the following detailed description describe various embodiments and are intended to provide an overview or framework for understanding the claimed subject matter. The accompanying drawings are included to provide a further understanding of the various embodiments, and are incorporated into and constitute a part of this specification. The drawings illustrate the various embodiments described herein, and together with the description serve to explain the principles and operations of the claimed subject matter.

### BRIEF DESCRIPTION OF THE DRAWINGS

FIG. 1A depicts an illustrative process flow diagram for building a component using manufacturing apparatuses and manufacturing methods according to one or more embodiments shown and described herein;
FIG. 1B schematically depicts a manufacturing apparatus according to one or more embodiments shown and described herein;
FIG. 2 schematically depicts an illustrative architecture of the manufacturing apparatus according to one or more embodiments shown and described herein;
FIG. 3 depicts a flow diagram of an illustrative method directed to printing methods to improve reliability according to one or more embodiments shown and described herein;
FIG. 4 depicts a flow diagram of an illustrative method directed to recoat methods to improve reliability according to one or more embodiments shown and described herein;
FIG. 5 depicts a flow diagram of an illustrative method directed to curing methods to improve building speeds according to one or more embodiments shown and described herein;
FIG. 6 depicts a flow diagram of an illustrative method directed to environmental control system operations methods to improve reliability according to one or more embodiments shown and described herein; and
FIG. 7 depicts an illustrative schematic of the motion of the printing assembly and the recoat assembly during the build process according to one or more embodiments shown and described herein.

### DETAILED DESCRIPTION

Reference will now be made in detail to embodiments of manufacturing apparatuses, and components thereof, examples of which are illustrated in the accompanying drawings. Whenever possible, the same reference numerals will be used throughout the drawings to refer to the same or like parts.

One embodiment of an additive manufacturing apparatus comprises a process chamber defining a volume having a height, length, and width. The length is defined by multiple processing zones. The processing chamber includes a cleaning zone, a build zone, and a supply zone sequentially positioned at discrete portions along the length of the process chamber. The process chamber includes an actuator assembly for distributing build material and depositing binder material in an additive manufacturing apparatus. The actuator assembly may generally include a support extending along the length of the process chamber in a first vertical plane. The actuator assembly may further include a recoat assembly for distributing build material and a printing assembly for depositing binder material. A printing assembly includes a plurality of nozzles for dispensing binder 50 within the build zone. The printing assembly is movably coupled to the support via a first actuator configured to move in a forward and reverse direction along a length of the support. The print head actuator may comprise a print motion axis, where the print head actuator is bi-directionally actuatable along the print motion axis thereby effecting bi-directional movement of the print head. The printing assembly is positioned in a second vertical plane parallel to the first vertical plane.

The recoat assembly includes one or more doctor blades and/or one or more rollers 142 for distributing build material 40 within the build zone, BZ. The recoat assembly is movably coupled to the support via a second actuator configured to move in a forward and reverse direction along a length of the support. The recoat assembly may include a recoat motion axis, where the recoat assembly is bi-directionally actuatable along the recoat motion axis thereby effecting bi-directional movement of the recoat head. The recoat assembly may be positioned in the second vertical plane parallel to the first vertical plane. The recoat motion axis and the print motion axis may share the same axis or may be parallel to one another and spaced apart from one another in the vertical direction. Embodiments of the printing assembly and recoat assembly may further include a curing system such as IR lamps to apply energy to build material and binder in the build zone to stimulate a curing reaction. Various embodiments of actuator assemblies for additive manufacturing apparatuses, additive manufacturing apparatus comprising the actuator assemblies, and methods for using the same are described in further detail herein with specific reference to the appended drawings.

Embodiments further include an environmental control system configured to control the environmental conditions within the process chamber. The environmental control system may include one or more subsystems to control environmental conditions within the process chamber. The one or more subsystems may include a heat exchanger, a dehumidifier, a condenser 182, or similar system capable of removing vapor from the environment of the process chamber, a process gas supply, an air filtration system (e.g., a cyclonic separator), and the like. The environmental control system is coupled to the process chamber through one or more ports, valves, ventilation conduits, or the like. In some embodiments, the environmental control system is adapted to maintain environmental conditions within the process chamber that are favorable to a particular build. For example, the environmental control system may regulate the environment within a predefined set of environmental conditions, which may include operating ranges for pressure, process gas concentration, relative humidity, concentration of airborne vapors, concentration of airborne build material, process chamber temperature, or the like within the process chamber.

Moreover, embodiments described herein more specifically disclose systems and methods for operating the printing assembly, the recoat assembly, the curing system, the environmental control system and the interactions thereof to improve reliability and speed of a build process. To improve reliability and speed of the build process, the manufacturing apparatuses disclosed herein further implement one or more sensors and control systems configured to operate in closed loop control loops.

Various embodiments of manufacturing apparatuses are described in further detail herein with specific reference to the appended drawings. It should be understood that the embodiments of the manufacturing apparatuses shown and described herein may be configured and operable to build three-dimensional and/or non-three dimensional objects or parts.

Ranges can be expressed herein as from "about" one particular value, and/or to "about" another particular value. When such a range is expressed, another embodiment includes from the one particular value and/or to the other particular value. Similarly, when values are expressed as approximations, by use of the antecedent "about," it will be understood that the particular value forms another embodiment. It will be further understood that the endpoints of each of the ranges are significant both in relation to the other endpoint, and independently of the other endpoint.

Directional terms as used herein, for example up, down, right, left, front, back, top, above, bottom, forward, reverse, and return are made only with reference to the figures as drawn and are not intended to imply absolute orientation unless otherwise expressly stated.

Unless otherwise expressly stated, it is in no way intended that any method set forth herein be construed as requiring that its steps be performed in a specific order, nor that with any apparatus specific orientations be required. Accordingly, where a method claim does not actually recite an order to be followed by its steps, or that any apparatus claim does not actually recite an order or orientation to individual components, or it is not otherwise specifically stated in the claims or description that the steps are to be limited to a specific order, or that a specific order or orientation to components of an apparatus is not recited, it is in no way intended that an order or orientation be inferred, in any respect. This holds for any possible non-express basis for interpretation, including: matters of logic with respect to arrangement of steps, operational flow, order of components, or orientation of components; plain meaning derived from grammatical organization or punctuation, and; the number or type of embodiments described in the specification.

As used herein, the singular forms "a," "an" and "the" include plural referents unless the context clearly dictates otherwise. Thus, for example, reference to "a" component 70 includes aspects having two or more such components, unless the context clearly indicates otherwise.

The embodiments described herein are directed to manufacturing apparatuses (e.g., additive manufacturing apparatuses) and components for manufacturing apparatuses, specifically printing assemblies for depositing binder 50, recoat assemblies for distributing build material, environmental control systems for controlling the environment within the process chamber, and one or more sensors configured to provide operational feedback to an electronic control unit for improving reliability and speed of the build process. The embodiments described herein may implement machine vision, pattern testing, print head maintenance, print head index-based redundancy or the like to establish closed loop reliability and speed improvement processes. The control loops described herein generally include steps of detecting, analyzing, and compensating build operations. It is understood that technology developed and described herein relates to manufacturing, however, aspects of the technology may have application in related industries such as 2-D printing or the like.

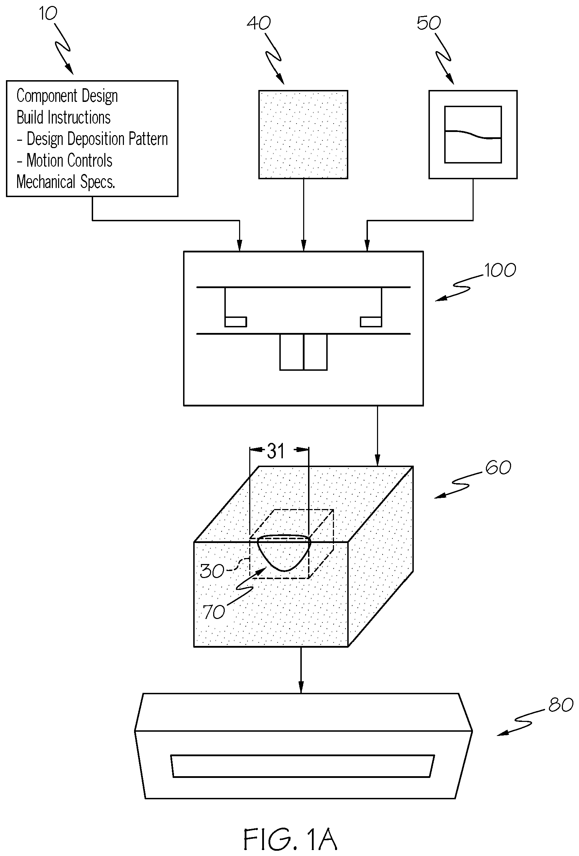

Referring to FIG. 1A, an illustrative process flow diagram for building a component 80 using manufacturing apparatuses 100 and manufacturing methods is depicted. FIG. 1A is intended to provide a non-limiting overview of the manufacturing apparatuses 100 and manufacturing methods depicted and described in detail herein. The apparatus 100 is configured to perform one or more predefined operations as prescribed by build instructions that are executed by a control system 10.

As used herein, "build instructions" refer to the control commands for manipulating the operation of the apparatus 100 to build a component 80. The build instructions are defined by, for example, design deposition patterns for each layer of the component 80 to be built and a plurality of motion controls defining commands setting forth an ordered operation of motors, actuators, printing assemblies, jet nozzles, and various other components of the apparatus 100 to build the component 80. The build instructions are defined based on a component design or model and mechanical specifications of the apparatus 100. For example, an apparatus 100 may include predefined and fixed distance between jet nozzles within a print head, referred to herein as "jet-spacing."

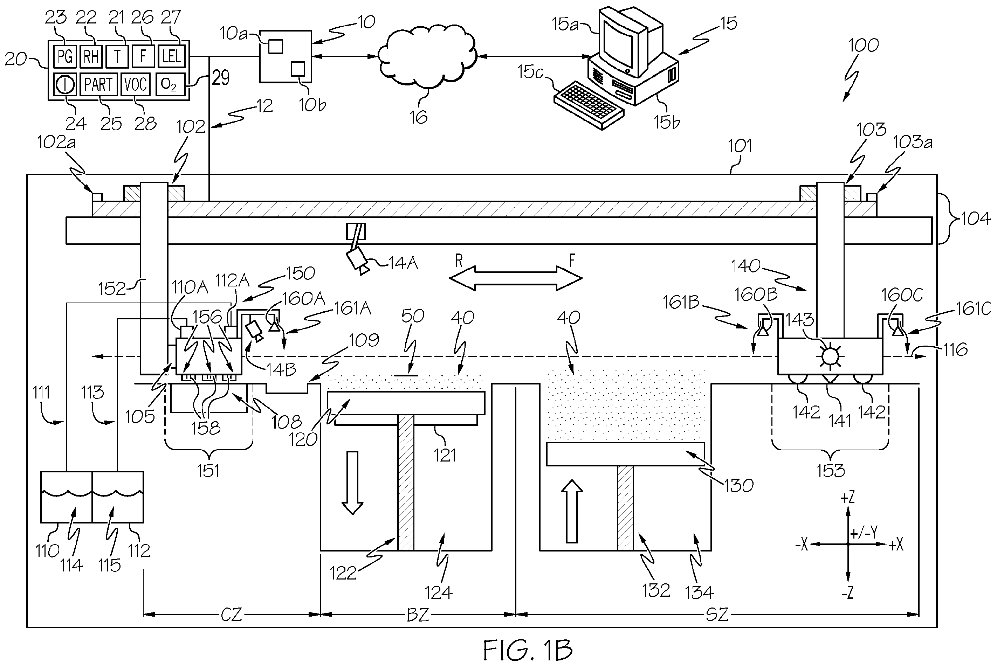

The apparatus 100 further receives build material 40 and binder 50 that may be deposited layer-by-layer and drop-by-drop, respectively, according to the build instructions for building the component 80. For example, the apparatus 100 may form a layer of powder 60 (also referred to herein as a layer of build material 40) on a build plate 120 (FIG. 1B) using a recoat assembly 140 (FIG. 1B) and then deposit one or more drops of binder 50 using a printing assembly 150 (FIG. 1B) within a pixel 31 thereby forming a voxel 30. "Build material" may include one or more organic and/or inorganic materials that when combined with a binder 50, and optionally a source of energy, cures to form a portion of a component 80.

As used herein, a "pixel" refers to a 2-dimensional spatial portion of the object or part to-be-printed by the apparatus 100, and in particular, a current slice or layer of the three-dimensional part relative to its positioning along the build plate 120. Each pixel corresponds to an image pixel defined in the design deposition pattern of the build instructions. The image pixel is the digital representation of a pixel. The image pixel includes a width defined by the jet-spacing of the jet nozzles of the apparatus 100. As used herein, a "voxel" refers to a 3-dimensional spatial portion of the powder in the build plate 120 defined by the one or more drops of binder 50 deposited within the pixel forming the current slice or layer of the three-dimensional part (e.g., the component 80). It is understood that a voxel may not be cubic as the shape of the shape of the voxel depends on the wicking and curing behavior of the binder 50 with the build material 40 (e.g., the layer of powder that binder 50 is deposited in).

Binder 50 may be deposited in various amounts at various locations within the layer of powder 60 (e.g. build material 40) in the form of droplets. The locations and amounts of the droplets are defined in the "design deposition pattern," which refers to a collection of image pixels forming the pattern of the desired slice of the build file, and when applied to by the apparatus 100 to the layer of powder 60 defines an "applied deposition pattern." While the design deposition pattern defines the amount (e.g., the "drop volume") and location (e.g., the location of the center of the droplet of binder 50 on the layer of powder 60), the applied deposition pattern refers to the distribution of the binder 50 through the layer or layers of powder, which may include overlap into adjacent pixels or lower layers of powder. As used herein, "drop volume" refers to the volume of the binder droplet that is released from a jet at one time. Multiple drops can be released for a single pixel, and the drops may vary in drop volume. After the formation of one or more layers of powder 60 and deposition of one or more droplets of binder 50, the apparatus 100 forms a component 80. More specific methods for forming the component 80 and embodiments of the apparatus 100 will now be described in detail.

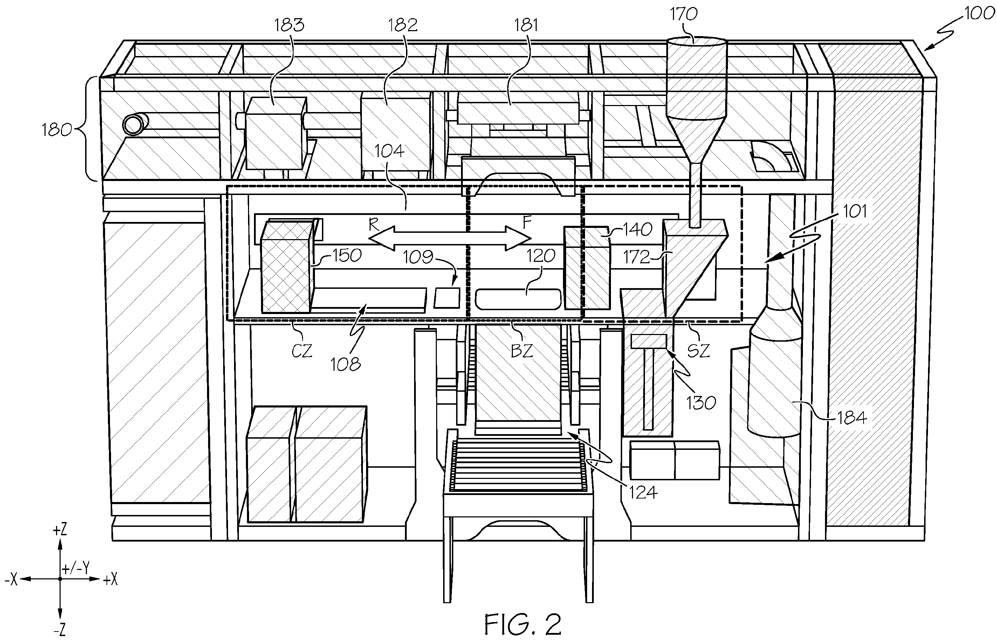

Referring now to FIG. 1B, an embodiment of a manufacturing apparatus 100 is schematically depicted. The apparatus 100 includes a process chamber 101. The process chamber 101 may be a hermetically sealed chamber and/or otherwise a pressurized or depressurized (e.g., maintained at or near a vacuum) chamber for building a component 70 under specific environmental conditions as controlled by the environmental control system 180 (FIG. 2). The process chamber 101 is defined by a volume having a height, a length, and a width. The length is defined by multiple processing zone. The processing zones include a cleaning zone "CZ", a build zone "BZ", and a supply zone "SZ" sequentially positioned at discrete portions along the length (along the +/- X-axis) of the process chamber 101. The apparatus 100 includes a cleaning station 108, a build plate 120, a supply platform 130, a recoat assembly 140, and a printing assembly 150. The cleaning zone "CZ" may include elements of the manufacturing apparatus 100 such as a cleaning station 108, and a jet testing/purging area 109. The building zone "BZ" may include elements of the manufacturing apparatus 100 such as a build plate 120, a build plate heater 121, a build platform actuator 122, and a build receptacle 124. The supply zone "SZ" may include elements of the manufacturing apparatus 100 such as a lower build material hopper 172 (FIG. 2), which may receive build material 40 from an upper build material hopper 170 (FIG. 2), and the supply platform 130, which may receive build material 40 from the lower build material hopper 172 (FIG. 2).

The recoat assembly 140 and the printing assembly 150 are coupled to a support 104 of the apparatus 100 and are configured to translate along the support 104 in response to an actuation of a first and second actuator assembly 102, 103. For example, the support 104 may be a linear actuator where one or more actuator assemblies 102, 103 may be independently and simultaneously operated. In some embodiments, the support 104 may be rectangular or square in vertical cross section (i.e., a cross section in the Y-Z plane of the coordinate axes depicted in the figures) while in other embodiments the rail 104 may have an "I" configuration in vertical cross section (i.e., a cross section in the Y-Z plane of the coordinate axes depicted in the figures). The first actuator assembly 102 and the second actuator assembly 103 may be constructed to facilitate independent control of the printing assembly 150 and the recoat assembly 140, respectively, along a working axis 116 of the apparatus 100. The working axis 116 is also referred to herein as the "longitudinal axis" (i.e., extending along the +/- X-axis as depicted in the figures). This allows for the recoat assembly 140 and the printing assembly 150 to traverse the working axis 116 of the apparatus 100 in the same direction and/or in opposite directions and for the recoat assembly 140 and the printing assembly 150 to traverse the working axis 116 of the apparatus 100 at different speeds and/or the same speed. Independent actuation and control of the recoat assembly 140 and the printing assembly 150, in turn, allows for at least some steps of a manufacturing process (e.g., additive manufacturing process) to be performed simultaneously thereby reducing the overall cycle time of the manufacturing process to less than the sum of the cycle time for each individual step. **In** other embodiments, the apparatus 100 may include additional actuator assemblies coupled to the recoat assembly 140, the printing assembly 150, and/or the like.

In some embodiments, a third actuator assembly 105 may be constructed to facilitate independent control of the printing assembly 150 along a latitudinal axis (e.g., extending along the +/- Y-axis as depicted in the figures), which is generally perpendicular to the longitudinal axis (e.g., the working axis 116, the +/- X-axis as depicted in the figures). As described in more detail herein, the third actuator assembly 105 may provide fine movement of the printing assembly 150 along the latitudinal axis, herein referred to as indexing. The first actuator assembly 102 and the third actuator assembly 105 are generally referred to as printing head position control assembly. That is, the printing head position control assembly includes the first actuator assembly 102 configured to move the printing head along the longitudinal axis and a third actuator assembly 105 configured to move the printing head along the latitudinal axis. The printing head position control assembly may be controlled via signals generated by a control system 10 such as an electronic control unit 10. The electronic control unit 10 may include a processor 10a and a non-transitory computer readable memory 10b.

In some embodiments, the first actuator assembly 102 includes a position sensor 102a and the second actuator assembly 103 includes a position sensor 103a that provide the electronic control unit 10 with position information of the recoat assembly 140 and/or the printing assembly 150 in a feedback control signal such that the electronic control unit 10 may track the position of the recoat assembly 140 and/or the printing assembly 150 in response to the provided control signals. In some instances, the electronic control unit 10 may make adjustments to the control signal provided to the first actuator assembly 102 and the second actuator assembly 103 based on the position information provided by the position sensors 102a, 103a. In embodiments, the position sensors 102a, 103a may be an encoder, an ultrasonic sensor, a light-based sensor, a magnetic sensor, or the like embedded in or coupled to the first actuator assembly 102, the second actuator assembly 103, and/or the support 104.

As noted above, in the embodiments described herein the recoat assembly 140 and the printing assembly 150 are both located on the working axis 116 (e.g., within a second vertical plane) of the apparatus 100. As such, the movements of the recoat assembly 140 and the printing assembly 150 on the working axis 116 occur along the same axis and are thus co-linear. With this configuration, the recoat assembly 140 and the printing assembly 150 may occupy the same space (or portions of the same space) along the working axis 116 of the apparatus 100 at different times during a single build cycle. In other embodiments, the components of the manufacturing apparatus 100 traversing the working axis 116, such as the recoat assembly 140, the printing assembly 150, or the like, need not be centered on the working axis 116. In this instance, at least two of the components of the manufacturing apparatus 100 are arranged with respect to the working axis 116 such that, as the components traverse the working axis 116, the components could occupy the same or an overlapping volume along the working axis 116.

The recoat assembly 140 is constructed to facilitate a distribution of a build material 40 over the build plate 120 from a supply of build material 40 provided on the supply platform 130. As will be described in greater detail herein, the printing assembly 150 is constructed to facilitate a deposition of a binder material 50 and/or other jettable composition materials (e.g., ink, fluid medium, nanoparticles, fluorescing particles, sintering aids, anti-sintering aids, or the like) over the build plate 120 as the printing assembly 150 traverses the BZ along a working axis 116 of the apparatus 100. In the embodiments of the apparatus 100 described herein, the working axis 116 of the apparatus 100 is parallel to the +/- X axis of the coordinate axes depicted in the figures. In the embodiments described herein the cleaning station 108, the build plate 120, and the supply platform 130, are positioned in series along the working axis 116. The recoat assembly 140 and the printing assembly 150 are also positioned in series along the working axis 116 of the apparatus 100 and in parallel within the cleaning station 108, the build plate 120, and the supply platform 130. Moreover, the recoat assembly 140 and the printing assembly 150 are also positioned in series along the working axis 116 of the apparatus 100 between a home position 151 of the printing assembly 150, located proximate an end of the working axis 116 in the -X direction, and a home position 153 of the recoat assembly 140, located proximate an end of the working axis 116 in the +X direction. That is, the home position 151 of the printing assembly 150 and the home position 153 of the recoat assembly 140 are spaced apart from one another in a horizontal direction that is parallel to the +/- X axis of the coordinate axes depicted in the figures and at least the build plate 120 and the supply platform 130 are positioned therebetween. In the embodiments, the build plate 120 (e.g., the BZ) is positioned between the cleaning station 108 (e.g., the CZ) and the supply platform 130 (e.g., the SZ) along the working axis 116 of the apparatus 100.

Still referring to FIG. 1B, the cleaning station 108 is positioned proximate one end of the working axis 116 of the apparatus 100 and is co-located with the home position 151 where the printing assembly 150 is located or "parked" before and after depositing a binder material 50 on a layer of build material 40 positioned on the build plate 120. The cleaning station 108 may include one or more cleaning sections to facilitate cleaning the printing assembly 150, and in particular, cleaning a plurality of print heads 156 of the printing assembly 150 between depositing operations. The cleaning station 108 may include, for example and without limitation, a soaking station containing a cleaning solution for dissolving excess binder material 50 from the plurality of print heads 156, a wiping station for removing excess binder material 50 and/or cleaning fluid from the plurality of print heads 156, a jet testing/purging area 109 for testing binder deposition patterns and/or purging binder material 50 and/or cleaning solution from the plurality of print heads 156, a capping station for maintaining moisture in a plurality of jet nozzles 158 of the plurality of print heads 156, or various combinations thereof. The printing assembly 150 may be transitioned between the cleaning sections by the first actuator assembly 102. In some embodiments, the apparatus 100 may include a jet testing/purging area 109 positioned proximate to one end of the working axis 116 adjacent to the cleaning station 108 and/or the home position 151. It should be understood that the jet testing/purging area 109 of the apparatus 100 may be configured to facilitate a material deposition by the printing assembly 150 prior to performing a deposition along the build plate 120. When the jet testing/purging area 109 functions as a jet testing area, the printing assembly 150 may dispense binder 50 material in a predefined pattern. The dispensed pattern may subsequently be captured by the vision system 14 and analyzed by the electronic control unit 10 to determine whether there are any anomalies in the nozzles 158 or print heads 156 of the printing assembly 150.

The build plate 120 is coupled to a build platform actuator 122 to facilitate raising and lowering the build plate 120 relative to the working axis 116 of the apparatus 100 in a vertical direction (e.g., a direction parallel to the +/- Z directions of the coordinate axes depicted in the figures). The build platform actuator 122 may be, for example and without limitation, a mechanical actuator, an electro-mechanical actuator, a pneumatic actuator, a hydraulic actuator, or any other actuator suitable for imparting linear motion to the build plate 120 in a vertical direction. Suitable actuators may include, without limitation, a worm drive actuator, a ball screw actuator, a pneumatic piston, a hydraulic piston, an electro-mechanical linear actuator, or the like. The build plate 120 and build platform actuator 122 are positioned in a build receptacle 124 located below the working axis 116 (i.e., in the -Z direction of the coordinate axes depicted in the figures) of the apparatus 100. During operation of the apparatus 100, the build plate 120 is retracted into the build receptacle 124 by action of the build platform actuator 122 after each layer of binder material 50 is deposited on the build material 40 located on the build plate 120. In some embodiments, the build plate 120 may further include a build plate heater 121 coupled thereto. The build plate heater 121 applies energy to the build material 40 and/or the binder 50 on the build plate 120 to facilitate evaporation processes and/or curing processes. The quicker the binder 50 and build material 40 within a layer cures the higher throughput the apparatus 100 can achieve since new layers may printed in rapid succession. As discussed herein, the apparatus 100 may also include other sources and forms of energy that is directed to the build material 40 and binder 50 in the build zone to accelerate curing processes.

Still referring to FIG. 1B, the supply platform 130 is coupled to a supply platform actuator 132 to facilitate raising and lowering the supply platform 130 relative to the working axis 116 of the apparatus 100 in a vertical direction (i.e., a direction parallel to the +/- Z directions of the coordinate axes depicted in the figures). The supply platform actuator 132 may be, for example and without limitation, a mechanical actuator, an electro-mechanical actuator, a pneumatic actuator, a hydraulic actuator, or any other actuator suitable for imparting linear motion to the supply platform 130 in a vertical direction. Suitable actuators may include, without limitation, a worm drive actuator, a ball screw actuator, a pneumatic piston, a hydraulic piston, an electro-mechanical linear actuator, or the like. The supply platform 130 and supply platform actuator 132 are positioned in a supply receptacle 134 located below the working axis 116 (i.e., in the -Z direction of the coordinate axes depicted in the figures) of the apparatus 100. During operation of the apparatus 100, the supply platform 130 is raised relative to the supply receptacle 134 and towards the working axis 116 of the apparatus 100 by action of the supply platform actuator 132 after a layer of build material 40 is distributed from the supply platform 130 to the build plate 120, as will be described in further detail herein. However, it should be understood that, in other embodiments, the apparatus 100 does not include a supply platform 130, such as in embodiments where build material 40 is supplied to the build plate 120 with, for example and without limitation, a build material hopper.

Embodiments of the additive manufacturing apparatus 100 include one or more energy sources 160 for heating and/or curing the build material 40 and binder 50. In embodiments, the recoat assembly 140 and/or the printing assembly 150 may include one or more energy sources 160 for facilitating curing and/or a phase change of the build material 40 and binder 50. The one or more energy sources 160 may include infrared lamps (IR lamps 160), ultraviolet sources, and/or other types of energy sources. The intensity, duration of exposure, and other parameters of the one or more energy sources 160 may be controlled by the electronic control unit 10 and related hardware components such as power circuits, control circuits and the like. As depicted a first IR lamp 160A is coupled to the forward facing (e.g., facing +X direction) surface of the printing assembly 150, a second IR lamp 160B is coupled to the reverse facing surface (e.g., facing -X direction) of the recoat assembly 140, and a third IR lamp 160C is coupled to the forward facing surface of the recoat assembly 140.

The manufacturing apparatus 100 further includes sensors to monitor component operations and environmental conditions of the apparatus 100. The sensors 20 are communicatively coupled to the electronic control unit 10. The electronic control unit 10 is configured to receive sensor data from the sensors, analyze the sensor data, and implement control functions such as build parameter compensation on-the-fly, as well as adjustments to the environment conditions within the process chamber 101. The sensors 20 may include sensor such as one or more temperature sensors 21 (e.g., a pyrometer, a thermocouple, a thermistor, or other type of temperature sensor configured to measure a surface or bulk temperature of a liquid or solid or a gas temperature), relative humidity sensors 22, process gas concentration sensors 23, current sensors 24, particulate sensors 25, force sensors 26, lower explosive limit (LEL) monitors 27, volatile organic compound (VOC) sensor 28, or similar solvent vapor concentration sensor, an oxygen sensor (O₂ sensor) 29, and/or the like. It should be understood that the sensors 20 may be statically mounted within the process chamber 101 or movably coupled to one or more moveable assemblies therein (e.g., the printing assembly 150, the recoat assembly 140, or the like). Moveable sensors 20 can offer the advantage of sensing areas of the process chamber 101 as the build process is in operation where sensing would otherwise be obstructed by the moving components of the manufacturing apparatus 100. Operation of the sensors 20 will be described in more detail with reference to the flow diagrams disclosed herein.

Figure 1B depicts at least two implementations of the vision system 14 (e.g., 14A and 14B). It should be understood that the vision system 14 is not limited to these two locations and configurations. The manufacturing apparatus 100 may include a vision system 14A that is coupled to the support 104. The vision system 14A may be an in-situ monitoring system that is utilized to capture image data of the build zone during a build process. The vision system 14A may alternatively be moveably coupled to the support 104 such that it may move along the support as the printing assembly 150 and the recoat assembly 140 also move along the support 104. The vision system 14A may pan, tilt, and/or zoom to capture various angles and view of zones (e.g. CZ, BZ, SZ) within the process chamber 101, but more specifically, to capture image data of the BZ (e.g., the component 70 being built on the build plate 120). The image data may be captured between passes of the printing assembly 150 or the recoat assembly 140 through the BZ to determine whether there is an anomaly with respect to the dispensed binder pattern or the new layer of distributed build material 40.

In some embodiments, the vision system 14 may be a vision system 14B which is coupled to either or both the printing assembly 150 and the recoat assembly 140. In such instances, the vision system 14B may be configured to capture image data of the BZ as the printing assembly 150 and the recoat assembly 140 are completing passes of the BZ. As the speed at which the printing assembly 150 and the recoat assembly 140 traverse the BZ increases the amount of time a static mounted type vision system 14A has to capture complete field of view image of the build plate 120 decreases or becomes non-existent. However, by implementing a vision system 14 (14A or 14B) which may move with and/or around the motion of the printing assembly 150 and the recoat assembly 140, the vision system 14A or 14B may be capable of taking sequential unobstructed images of the BZ during a pass of the printing assembly 150 and/or the recoat assembly 140 over the BZ. The captured image data may be subsequently stitch together to develop a full image of the active build on the build plate 120.

The vision system 14 is communicatively coupled to the electronic control unit 10. The vision system 14 may be any device having an array of sensing devices (e.g., pixels) capable of detecting radiation in an ultraviolet wavelength band, a visible light wavelength band, or an infrared wavelength band. The vision system 14 may implement one or more cameras or other imaging devices such as an X-ray device. The vision system 14 may include one or more cameras sensitive to detecting electromagnetic radiation in the visible spectrum, the infrared spectrum, and/or the ultraviolet spectrum. Accordingly, the vision system 14 may include an electromagnetic radiation excitement sources such as a lamp, infrared emitter, ultraviolet light source or the like, which directs electromagnetic radiation onto a surface, for example, the build material 40 and binder 50 within the build zone BZ which is then reflected therefrom to the one or more cameras and captured by the one or more cameras of the vision system 14. In some embodiments, the reflected light from a visible spectrum light sources such as a lamp may illuminate powder gouging, short spreading, missing regions of the binder 50 or the like through a contrast analysis of the captured image data. Generally, image data captured in visible light is useful in detecting large defect regions; however, other sources of electromagnetic radiation can be used to detect small defect regions. In some embodiments, the vision system 14, which is configured to detect and capture infrared radiation, may be used to develop thermal contrast images of the build material 40 and binder 50 in the build zone BZ. In such instances, the thermal contrast images may be analyzed to determine the depth of penetration of binder 50 into the build material 40 and/or other defects not visible through a visible light inspection of the build zone BZ. In some embodiments, the vision system 14 may be configured to detect and capture image data of, for example, the build material 40 and the binder 50 in the build zone BZ, which is excited by ultraviolet light. The sensitivity of the vision system 14 to ultraviolet light provides image data having enhanced contrast between binder 50 and build material 40 within the build zone BZ. The image data having an enhance contrast between the binder 50 and build material 40 includes a higher signal-to-noise ratio as compared to other image data captured under different illumination sources. While the aforementioned embodiment is described for purposes of capturing image data and determining anomalies in the build from the image data the aforementioned embodiment may be used in machine vision enabled auto-depowdering to determine whether a part is completely depowdered (e.g., fluorescent surface intensity would be greater than a threshold when powder is present.).

The one or more cameras may have any resolution. The one or more cameras may be an omni-directional camera, or a panoramic camera. In some embodiments, one or more optical components, such as a mirror, fish-eye lens, or any other type of lens may be optically coupled to each of the one or more cameras. In embodiments described herein, the one or more cameras may provide image data to the electronic control unit 10.

The electronic control unit 10 may implement one or more image analysis processes to determine the presence of an anomaly with respect to the dispensed binder pattern or the new layer of distributed build material 40. The processes may include machine-vision analysis, machine learning algorithms, artificial intelligence AI, or the like. In some embodiments, electronic control unit 10 may determine anomalies based on inconsistencies in the levels of light (e.g., light intensity) or differences in contrast in the image data of the build material 40 on the build plate 120. The inconsistencies in light levels may indicate that there are defects in a recoat layer such as short spreading, gouging, missed regions of binder 50, or the like. With respect to binder deposition patterns, differences in light levels may also be utilized to identify the deposited binder pattern and the electronic control unit 10 may compare the identified deposited binder pattern with an expected or predefined binder pattern for the particular layer of the build.

In some embodiments, the electronic control unit 10 maintains a log of feedback parameters from the various sensors and systems of apparatus 100. The logs may be compiled and analyzed by the electronic control unit 10 along with instances where anomalies are detected to develop predictive analytics. Accordingly, the electronic control unit 10, overtime, will be able to predict when an anomaly will occur based on a sequence of events or sensor readings prior to the anomaly occurring. For example, if a layer to layer increase in the current associated with a roller of a recoat assembly 140 is present prior to an anomaly being detected in image data, then the electronic control unit 10 may implement preventative maintenance or other compensation measures prior to the anomaly occurring. For example, if the system detects defects, the first action is to log the defect and log the sensor data set of the apparatus 100 for the instant layer and a predetermined number of previous layers. This logged data may be used later for development of predictive analytics.

The printing assembly 150 comprises, among other features, a support bracket 152, a printing head 154, and a plurality of print heads 156. The support bracket 152 is movably coupled to the support 104 and the first actuator assembly 102 of the apparatus 100 while the printing head 154 is positioned along an opposite end of the support bracket 152 and movably coupled thereto via a third actuator assembly 105 configured to operably index the printing head along a latitudinal axis. As described in greater detail herein, the printing head 154 of the printing assembly 150 may include two or more rows of a plurality of print heads 156 and in some embodiments, at least one of which is movable relative to another row of a plurality of print heads 156. This allows for at least the material deposit steps of the manufacturing process to be performed with enhanced jetting reliability and jetting resolution by varying a relative location of the at least one movable row of print heads 156.

However, in some embodiments the printing assembly 150 includes a plurality of print heads 156, which comprise a plurality of jet nozzles 158. The plurality of jet nozzles 158 are spaced apart from one another in a direction transverse to a longitudinal axis, where a distance from a first jet nozzle to a second jet nozzle positioned adjacent the first jet of the plurality of jets defines a jet-spacing.

Still referring to FIG. 1B, the manufacturing apparatus 100 may further include a control system 10 communicatively coupled to the first actuator assembly 102, the third actuator assembly 105 (collectively referred to herein as the printing head position control assembly), the recoat assembly 140, the second actuator assembly 103 and/or the printing assembly 150. In some embodiments, the control system 10 may be particularly coupled to one or more actuators of the printing assembly 150. In the present example the control system 10 is coupled to the apparatus 100 via a communication conduit 12, however, it should be understood that in other embodiments the control system 10 may be communicatively coupled to the apparatus 100 via various other means or systems, such as, for example, through a wireless connection. The control system 10, which may also be referred to as an electronic control unit 10, comprises a processor 10a and a non-transitory memory 10b that includes computer readable and executable instructions stored thereon. Any action of the apparatus 100, including the actions described herein, may be caused to be performed by the computer readable and executable instructions (e.g., build instructions defining the sliced files and/or deposition patterns for layers of the component 70 to be built, predefined build material dosing parameters, predefined set of environmental conditions, and/or the like) stored in the non-transitory memory 10b of the electronic control unit 10 when executed by the processor 10a of the electronic control unit 10.

For example, one or more actuators of the first actuator assembly 102 (e.g., mechanical actuators, electro-mechanical actuators, pneumatic actuators, hydraulic actuators, worm drive actuators, ball screw actuators, pneumatic pistons, hydraulic pistons, electro-mechanical linear actuators, etc.) may be actuated by the computer readable and executable instructions stored in the non-transitory memory of the control system 10 when executed by the processor 10a of the electronic control unit 10 to cause the printing assembly 150 and/or the recoat assembly 140 to move in the manner described herein. Furthermore, as described in greater detail below, the computer readable and executable instructions stored in the non-transitory memory 10b may cause the electronic control unit 10 to, when executed by the processor 10a, perform various processes for moving the printing assembly 150, actuating the one or more actuators 105 of the printing assembly 150 to move the rows of print heads 156, depositing materials onto the build material 40 (e.g., powder or other material) in the build plate 120, and the like.

In some embodiments, the electronic control unit 10 may be further communicatively coupled to a computing device 15, optionally via a network 16, or directly via a communication link such as a wired or wireless connection. The computing device 15 may include a display 15a, a processing unit 15b (e.g., having at least a processor 10a and memory) and an input device 15c, each of which may be communicatively coupled together and/or to the network 16. The computing device 15 may be configured to carry out processes such as generating executable instruction for building a component 70 with the apparatus 100. The process may implement CAD or other related three-dimensional drafting and rendering systems as well as a slicing engine or the like. A slicing engine may be logic configured to receive a model or drawing of a component 70 for building and process the model or drawing into build instructions defining a plurality of motion control operations, powder layer placements, deposition patterns for binder, and the like to be performed by the apparatus 100 to build the component 70. The slicing engine may determine the number of layers of powder a build should include as well as locations within the layers of powder that binder 50 should be dispensed. The deposition patterns of binder 50 may also include defining the amount (volume) of binder 50 that is to be dispensed at particular locations within the layer of powder.

In some embodiments, the network 16 is a personal area network that utilizes Bluetooth technology to communicatively couple the control system 10. In other embodiments, the network 16 may include one or more computer networks (e.g., a personal area network, a local area network, or a wide area network), cellular networks, satellite networks, and/or a global positioning system and combinations thereof. Accordingly, the control system 10 and/or the apparatus 100 can be communicatively coupled to the network 16 via wires, via a wide area network, via a local area network, via a personal area network, via a cellular network, via a satellite network, or the like. Suitable local area networks may include wired Ethernet and/or wireless technologies such as, for example, Wi-Fi. Suitable personal area networks may include wireless technologies such as, for example, IrDA, Bluetooth, Wireless USB, Z-Wave, ZigBee, and/or other near field communication protocols. Suitable personal area networks may similarly include wired computer buses such as, for example, USB and FireWire. Suitable cellular networks include, but are not limited to, technologies such as LTE, WiMAX, UMTS, CDMA, and GSM.

The apparatus 100 further includes one or more fluid reservoirs 110, 112 fluidly coupled to the printing assembly 150 via one or more conduit lines. In some embodiments, the printing assembly 150 may also include one or more local fluid manifolds 110A and 112A for locally storing fluid. In particular, the one or more fluid reservoirs may be fluidly coupled to the one or more local fluid manifolds 110A and 112A of the printing assembly 150. In this instance, a plurality of jet nozzles 158 of each of the plurality of print heads 156 are in fluid communication with a material stored within the one or more local fluid manifolds 110A and 112A. FIG. 1B depicts the one or more fluid reservoirs as including a first fluid reservoir 110 containing a first material 114 stored therein and a second fluid reservoir 112 containing a second material 115 stored therein, where the first material 114 is different than the second material 115. The first fluid reservoir 110 is in fluid communication with the plurality of print heads 156 via a first conduit 111 and the second fluid reservoir 112 is in fluid communication with the plurality of print heads 156 via a second conduit 113. In some embodiments, the first fluid reservoir 110 and the second fluid reservoir 112 may contain the same material. In some embodiments, the plurality of print heads 156 may be coupled to a single fluid reservoir containing the same material such that the plurality of print heads 156 is configured to deposit the same material.

As will be described in greater detail herein, in some embodiments, the first fluid reservoir 110 is coupled to a different subset (i.e., a first subset) of the plurality of print heads 156 than the second fluid reservoir 112 (i.e., a second subset) such that the plurality of print heads 156 collectively receive and dispense each of the first material 114 and the second material 115, but each of the plurality of print heads 156 of the printing assembly 150 receive and dispense one of the first material 114 or the second material 115. In other embodiments, the first conduit line 111 and the second conduit line 113 may be coupled to one another at a coupling mechanism, such as, for example, a manifold, a valve, and/or the like. In this instance, the fluid reservoirs 110, 112 are in fluid communication with the coupling mechanism via the conduits lines 111, 113, where the coupling mechanism includes a third conduit line coupled thereto and extending to the printing head 154. The coupling mechanism may be configured to selectively transition fluid communication between the fluid reservoirs 110, 112 and the printing head 154 such that the plurality of print heads 156 receive one of the first material 114 or the second material 115 in response to an actuation of the coupling mechanism. It should be understood that the coupling mechanism may be further configured to facilitate simultaneous fluid communication of the first fluid reservoir 110 and the second fluid reservoir 112 with the printing assembly 150 such that the plurality of print heads 156 receive both materials 114, 115 concurrently. In some embodiments, one or more valves, one or more pumps or both may be fluidly coupled with the conduits lines 111, 113 and the print heads 156 to control the flow of binder 50 to the print heads 156. In some instances, a pump and valve may be operated to cause an increase of pressure to the flow of binder 50 within and/or distributed from the nozzles 158 of the print heads 156. Such an operation is referred to as a purging operation and may be utilized to clean the nozzles 158 and improve the operation of the print heads 156.

Referring now to FIG. 2, an illustrative embodiment of the manufacturing apparatus 100 is depicted. As described herein, the manufacturing apparatus 100 includes a process chamber 101, a support 104, a cleaning station 108, a build plate 120, a supply platform 130, a recoat assembly 140, a printing assembly 150, an upper build material hopper 170 that feeds a lower build material hopper 172 and subsequently a supply platform 130, and an environmental control system 180. The process chamber 101 includes a cleaning zone CZ, a build zone BZ, a supply zone SZ sequentially positioned at discrete portions along the length of the process chamber 101. The process chamber 101 includes an actuator assembly for distributing build material 40 and depositing binder material 50 in an additive manufacturing apparatus 100. The actuator assembly may generally include a support 104 extending along the length (e.g., along the +/- X-axis) of the process chamber 101 in a first vertical plane. The actuator assembly may further include a recoat assembly 140 for distributing build material 40 and a printing assembly 150 for depositing binder material 50. The printing assembly 150 is movably coupled to the support 104 via a first actuator 102 (FIG. 1B) configured to move in a forward (F) (+X-axis) direction and reverse (R) (-X-axis) direction along a length of the support 104. The printing assembly 150 is positioned in a second vertical plane parallel to the first vertical plane.

The recoat assembly 140 includes one or more powder spreading members such as one or more doctor blades 141 (FIG. 1B) and/or one or more rollers 142 (FIG. 1B) for distributing build material 40 on the build plate 120 within the BZ. The one or more rollers 142 may be driven by a motor to rotate and distribute build material 40 or may be passive rotating members. In either case, a current sensor 24 may be utilized to monitor the rotation of the one or more rollers 142, for example, to determine whether there is resistance to the rotation of the roller as the recoat assembly 140 traverses the SZ and the BZ. In some embodiments, the recoat assembly 140 includes a roller brush 143 (FIG. 1B) that may contact and rotate to clean the one or more powder spreading members.

The recoat assembly 140 is movably coupled to the support 104 via a second actuator 103 (FIG. 1B) configured to move in a forward (F) and reverse (R) direction along a length of the support. The recoat assembly 140 may include a recoat motion axis, where the recoat assembly 140 is bi-directionally actuatable along the recoat motion axis thereby effecting bi-directional movement of the recoat assembly 140. The recoat assembly 140 is positioned in the second vertical plane parallel to the first vertical plane. The recoat motion axis and the print motion axis may share the same axis or may be parallel to one another and spaced apart from one another in the vertical direction.

The BZ includes a build plate 120. The build plate 120 may be located within a build receptacle 124 that is optionally sealed to the process chamber 101. The supply zone SZ includes the supply platform 130 and is configured to supply build material 40 to the recoat assembly 140 for distribution over the build zone BZ. The supply platform 130 may be coupled to the lower build material hopper 172 via one or more control and transport mechanism that provide continuous and stable supplies of build material 40. The upper build material hopper 170 may include an electrically or pneumatically actuated valve (not depicted) to release build material 40 into the lower build hopper 172 which may transfer build material 40 onto the supply platform 130. The build material 40 on the supply platform 130 may be transferred from there to the build plate 120 as the recoat assembly 140 traverses over the build plate 120. The supply platform 130 may be actuated up and down (+/- along the Z-axis) so that the lower build hopper 172 may transfer additional build material 40 on to the supply platform 130 (e.g., when in a down position) and the recoat assembly 140 may push build material 40 from the supply platform 130 to the build plate 120 (e.g., when the supply platform 130 is in an up position).

The cleaning zone CZ includes a cleaning station 108. The cleaning station 108 may include one or more cleaning sections to facilitate cleaning the printing assembly 150, and in particular, the plurality of print heads 156 of the printing assembly 150 between binder depositing operations. The cleaning sections may include, for example and without limitation, a soaking station containing a cleaning solution for dissolving excess binder material 50 from the plurality of print heads 156, a wiping station for removing excess binder material 50 and/or cleaning solution from the plurality of print heads 156, a jetting station for purging binder material 50 (e.g., to re-establish a meniscus in the jet nozzles 158) and/or cleaning solution from the plurality of print heads 156, a capping station for maintaining moisture in a plurality of jet nozzles 158 of the plurality of print heads 156, or various combinations thereof. The printing assembly 150 may be transitioned between the cleaning sections by the first actuator assembly 102. In some embodiments, the apparatus 100 may include a jet testing/purging area 109 (e.g., where the printing assembly 150 may perform purging processes) positioned proximate to one end of the working axis 116 adjacent to the cleaning station 108 and/or the home position 151 (FIG. 1B). The jet testing/purging area 109 of the apparatus 100 may be configured to facilitate a material deposition by the printing assembly 150 (e.g., a purging process) prior to performing a deposition along the build plate 120. In some embodiments, the jet testing/purging area 109 functions as a jet testing area. In such an instance, the printing assembly 150 may dispense binder 50 material in a predefined pattern referred to herein as a spit/test pattern. For example, the spit/test pattern may include a spatial arrangement of dots and/or lines of binder 50 dispensed by a corresponding jet nozzle and spatially arranged in such a way as to allow discrimination between individual jet nozzles. Accordingly, the dispensed pattern when captured by vision system 14 and analyzed by the electronic control unit 10, may provide information such as the health of the jet nozzle including volume output, trajectory alignment (e.g., straightness), spatial arrangement between the individual jet nozzles 158 of the plurality of jets (e.g., yaw, offsets, and/or overlap) or the like. The dispensed pattern may subsequently be captured by the vision system 14 and analyzed by the electronic control unit 10 to determine whether there are any anomalies in the nozzles 158 or print heads 156 of the printing assembly 150. The electronic control unit 10 may compare captured images of the dispensed pattern with historical image data or image data of expected dispensed patterns to determine whether there are any anomalies with the nozzles 158 or print heads 156 of the printing assembly 150.

The manufacturing apparatus 100 further includes an environmental control system 180. The environmental control system 180 is coupled to the process chamber 101 through one or more ports, valves, ventilation conduit, or the like. The environmental control system 180 includes one or more subsystems to control environmental conditions within the process chamber 101. The one or more subsystems may include a heat exchanger 181, a dehumidifier and/or condenser 182, a process gas supply 183, an air or process gas filtration system 184 and/or the like. Each of the subsystems may include one or more controllable valves that the electronic control unit 10 may electronically or pneumatically activate or deactivate such that the valve may be opened or closed or such that the subsystem is connected or disconnected from the process chamber 101. In some embodiments, the environmental control system 180 is adapted maintain environmental conditions within the process chamber 101 which are favorable to a build. For example, the environmental control system 180 may regulate the environment within a predefined set of environmental conditions, which may include operating ranges for pressure, process gas concentration, relative humidity, solvent vapor concentration, concentration of airborne build material 40, process chamber 101 temperature, or the like within the process chamber 101.

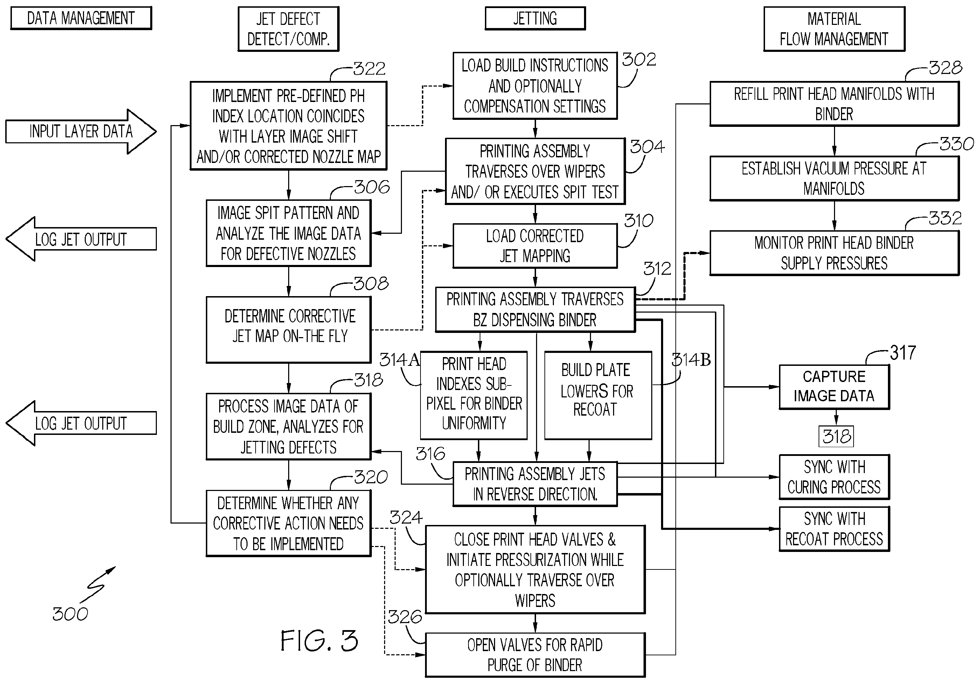

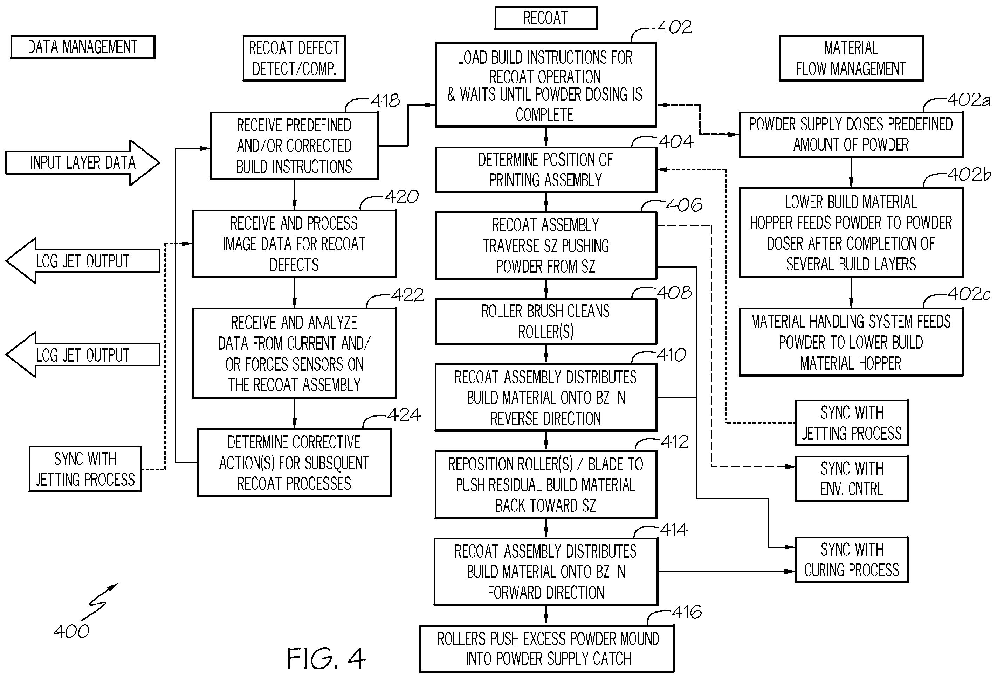

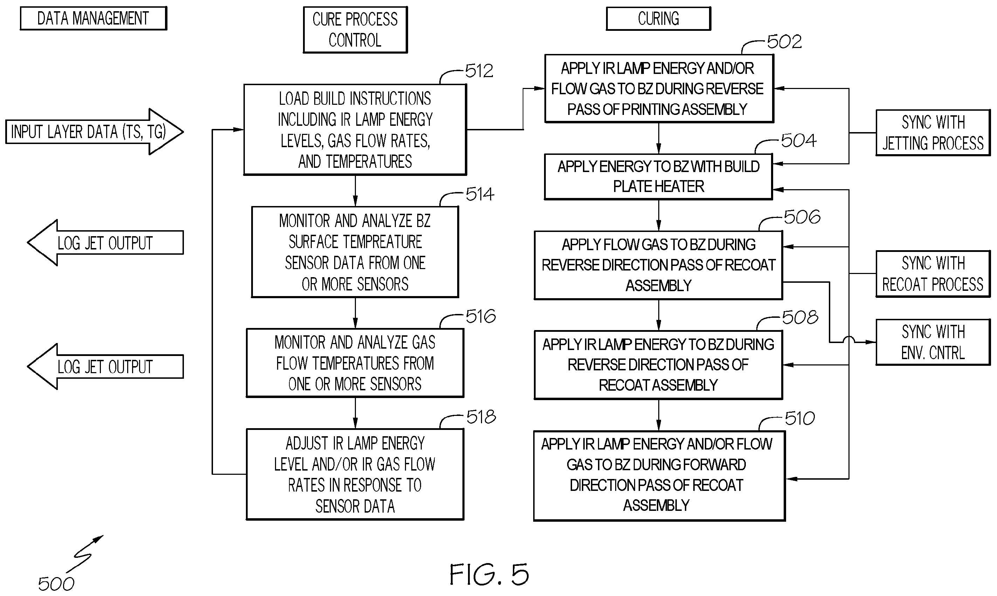

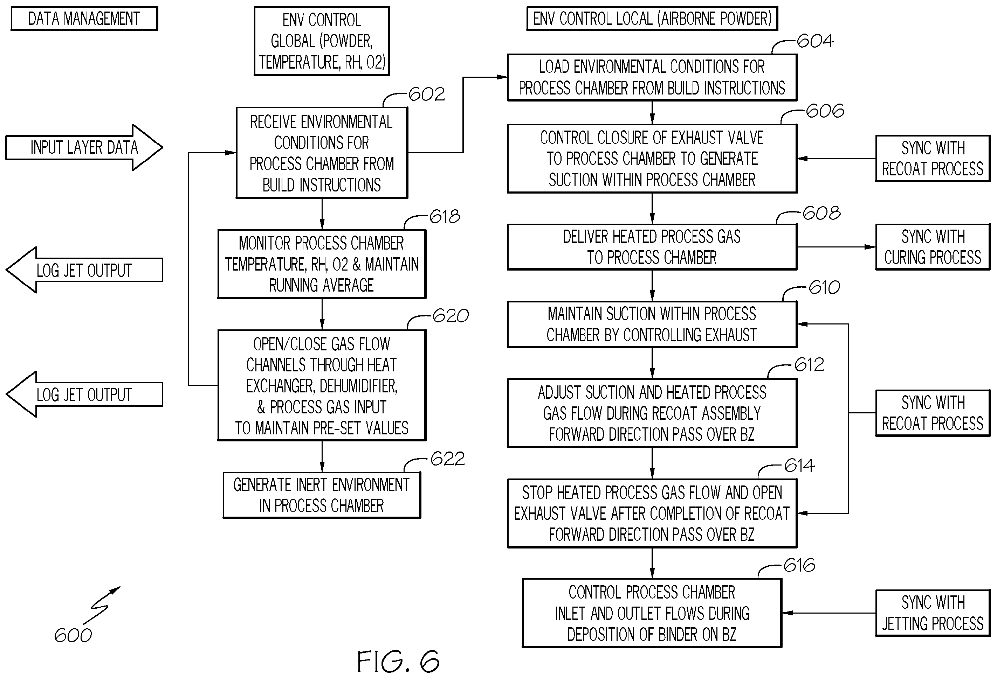

Turning now to FIGS. 3-6, flow diagrams depicting exemplary methods of the operation of the manufacturing apparatus 100. More specifically, the exemplary methods disclose closed loop control methods that improve the reliability and speed of building a component 70. For example, in general the methods include steps of detecting, analyzing, and compensating build operations to improve reliability and increase the speed of operations. FIG. 3 depicts a flow diagram related to printing methods to improve reliability. FIG. 4 depicts a flow diagram related to recoat methods to improve reliability. FIG. 5 depicts a flow diagram related to curing methods to improve building speeds. FIG. 6 depicts a flow diagram related to environmental control system 180 operations methods to improve reliability. It should be understood that each of these methods may be implemented as control logic and carried out by the electronic control unit 10. Furthermore, although the methods are depicted in separate flow diagrams, the methods may be integrated together.

Turning to FIG. 3, the flow diagram 300 depicts printing methods including closed loop control operations to improve reliability of a build operation. In embodiments, the electronic control unit 10 loads build instructions for the printing assembly 150 to build a component 70, at block 302. In some embodiments, the build instructions include compensation settings such as image shift settings and/or jet nozzle mappings to address defective nozzles 158. A plurality of pixels and/or voxels defining spatial portions of the build material 40 within the build plate 120 may be defined based on a digital build file (e.g., defining deposition patterns and/or apparatus 100 control instructions stored and/or uploaded to the electronic control unit 10) of the component 70 to be built by the apparatus 100. The digital build file may be included in the build instructions. The pixels per layer of a build may be defined along to a trajectory the printing assembly 150 is configured to traverse over the build zone BZ. The electronic control unit 10 based on the build instructions may map one or more jet nozzles 158 to a trajectory and/or pixels and the corresponding design deposition pattern for the current layer of the build such that the jet nozzles 158 deposit prescribed drop volumes of binder 50 at prescribed locations on the build material 40 in the build zone BZ.

In some embodiments, before the printing assembly 150 begins depositing binder 50 on the build material 40 in the build zone, the printing assembly 150 traverses the cleaning zone CZ, at block 304. It should be understood that some processes described herein may be performed in parallel to reduce turnover time. For example, loading the build instructions, performing a cleaning operation of the printing assembly 150 and the like may be performed in parallel. In the cleaning zone CZ, the printing assembly 150 may traverse the wipers and/or other elements of the cleaning station 108 to clean the jet nozzles 158 and/or establish a meniscus in each of the jet nozzles 158. In some embodiments, the printing assembly 150 may execute a cleaning operation, for example as described above, in response to determining a defect with a jet nozzle as described at blocks 306 and 308. The printing assembly 150 may also execute a spit/test pattern in a jet testing/purging area 109 at block 304. At block 306, the vision system 14 may image the spit pattern and digitize the image data for analysis. The image data is analyzed to determine whether there are any defective nozzles 158 within the printing assembly 150. If the electronic control unit 10 determines the presence of defective nozzles 158, a corrective jet mapping may be determined at block 308. In some embodiments, the electronic control unit 10 may cause the printing assembly 150 to perform a cleaning operation in response to determining the presence of a defective jet nozzle 158 to attempt to correct the defect such as a clogged nozzle or implement a corrective jet mapping such that the defective jet nozzle 158 may be removed from use during the layer build or the impact of the defective jet nozzle 158 maybe minimized. The corrective jet mapping may include a remapping the jet nozzles 158 from a planned trajectory for an upcoming build pass (e.g., a binder deposition pass over the build zone BZ) to a corrected trajectory for the upcoming and optionally subsequent build passes over the build zone BZ. Trajectory refers to the path a jet nozzle traverses over the build zone BZ when the printing assembly 150 traverses the BZ. The corrective jet mapping may be implemented to update the control operation of the printing assembly 150 at block 310 in response to determining a defective jet nozzle 158 is present. For example, an adjustment to the programmed deposition pattern for the subsequent traversal of the printing assembly over the build zone may include updating a mapping of the select ones of the plurality of nozzles to select pixels of a subsequent build layer such that a first nozzle mapped to dispense binder to a first select set of pixels during a first traversal of the printing assembly is mapped to dispense binder to a second select set of pixels during a second traversal of the printing assembly over the build zone. In some embodiments, select ones of a plurality of nozzles may be remapped for a subsequent build layer such that a first nozzle mapped to dispense binder in a previous traversal of the printing assembly is mapped to a region of the build layer where there are no pixels.

In some embodiments, this operation may be performed "on-the-fly," for example, before the printing assembly 150 traverses the build zone BZ and dispenses binder 50 during a forward direction pass. "On-the-fly" refers to making an adjustment to the operation of the printing assembly 150 (or recoat assembly 140) between passes over a layer of the build that is not a predefined adjustment loaded into the machine before the build operation for the layer begins. At block 312, the electronic control unit 10 causes the printing assembly 150 to traverse the build zone in a forward direction while dispensing binder 50 according to a programmed deposition pattern defined by the build instructions and any corrective settings such as a corrected jet map. It is noted that the activities at block 312 may be synchronized with the activities at block 404 of the recoat process to ensure the printing assembly 150 and the recoat assembly 140 to do not collide. Additionally, it is noted that the activities at block 312 may be synchronized with the activities at block 502 of the curing process.

Once the printing assembly 150 completes a forward direction pass of the build zone BZ, at block 314A the print heads 156 of the printing assembly 150 may be indexed in by an integer multiple of a sub-pixel increment before executing a second pass (e.g., a reverse direction pass) over the build zone BZ to improve the uniformity of the binder deposition. In some embodiments, once the printing assembly 150 completes a forward direction pass of the build zone BZ the completion of the forward direction pass may triggers the build plate 120 to lower prior to the recoat assembly 140 executing a pass over the build zone BZ to distribute a new layer of build material 40 at block 314B. In some embodiments, both blocks 314A and 314B are performed. While in some instances, neither of the processes at block 314A and 314B are performed. That is, the printing assembly 150 completes a forward direction pass over the build zone BZ dispensing binder 50 at block 312 and then proceeds to block 316 wherein the printing assembly 150 executes a reverse direction pass over the build zone BZ. Moreover, if the build plate 120 is not lowered after completion of printing assembly's 150 forward direction pass over the build zone BZ, the build plate 120 is lowered after the printing assembly's 150 reverse direction pass over the build zone BZ. During the reverse direction pass over the build zone BZ, the printing assembly 150 may dispense binder 50 as described herein or may traverse the build zone BZ without dispensing any further binder 50 on the layer of the build.

In some embodiments, once the printing assembly 150 completes the forward direction pass and/or the reverse direction pass of the build zone BZ, the vision system 14 may capture image data of the build zone BZ for analysis at block 317 for analysis at block 318. In some embodiments, once the printing assembly 150 completes a first forward direction pass of the build zone BZ, the electronic control unit 10 may determine, in response to analysis of feedback from the one or more sensors, that a subsequent forward direction pass is needed to deliver the correct amount of binder 50 in the event of a jetting failure. In such an instance, the electronic control unit 10 may cause the printing assembly 150 to return to the home position 151 side of the build zone BZ to repeat binder deposition in the forward direction pass over the build zone BZ, optionally, with an adjusted jet nozzle mapping such that the one or more defective jet nozzles 158 are not aligned with the same trajectory as the initial pass.

At block 316, the electronic control unit 10 causes the printing assembly 150 to traverse the build zone in a reverse direction while dispensing binder 50 according to a programmed deposition pattern defined by the build instructions. It is noted that the activities at block 316 may be synchronized with the activities at block 502 of the curing process and optionally with the activities at block 404 of the recoat process. At block 318, either before, during, or after the printing assembly's 150 traversal of the build zone BZ in the reverse direction, the electronic control unit 10 analyzes the image data captured at block 317 to determine whether there were any jetting defects or anomalies in the dispensed binder pattern. In response to determining the presence of the anomaly in the dispensed binder pattern, the electronic control unit 10 may adjust the programmed mapping of the jet nozzles 158 to the trajectory and/or pixels of the build deposition pattern for a subsequent traversal of the printing assembly 150 over the build zone to address the anomaly at block 320. Any adjustments to the jet nozzle mapping may be implemented by the electronic control unit 10 and the printing assembly 150 at block 322, which then returns to block 302. At block 322, a pre-planned, for example, randomized, indexing of the jet nozzles between layers and or passes of a layer of the build may be implemented into the build instructions. For example, the pre-planned indexing provides that the same jet nozzle may not traverse the same trajectory across the build zone BZ either between layers or between passes of a layer, thereby implementing planned randomization of portions of the build that a jet nozzle dispenses binder onto. This randomization provides a level of redundancy in cases where a jet nozzle fails during a build. The randomization shifts (e.g., indexes) the jet nozzles to different trajectories at predefined intervals or passes so that a defective jet nozzle does not continue to traverse the same trajectory, thus exacerbating any issues caused by the defective jet nozzle. Some adjustments may include, for example, corrective jet nozzle mapping, grayscale compensation such as oversaturating the next layer to address defective binder deposition during a previous layer or other jet nozzle cleaning operations. Other jet nozzle cleaning operations may include aggressive purging operations where pressurized binder 50 is purged from the jet nozzles 158 into the jet testing/purging area 109, for example, as described in more detail with reference to block 324. In some instances, the further corrective actions such as a cleaning or material purging operation may be completed by the printing assembly 150 at block 324 and 326 in response to determining the presence of the anomaly in the dispensed binder pattern at block 320. In operations where the same jet nozzle or plurality of jet nozzles 158 are repeatedly identified as defective or needing to be cleaned more often than others, the electronic control unit 10 may detect the increased frequency of issues with the jet nozzle(s) and flag jet nozzle(s) to an operator or quality oversight system so that replacement or repair may be scheduled and undertaken.

For example, at block 324, the electronic control unit 10 may cause the printing assembly 150 to perform a cleaning operation. The cleaning operation may include causing the printing assembly 150 to traverse the wipers and/or other cleaning elements of the cleaning station 108 in the cleaning zone CZ. For example, a valve associated with the print head for controlling binder 50 flow from the binder supply lines 111 and 113 may be closed and the nozzles 158 pressurized. This operation may optionally occur while the printing assembly 150 is traversing the wipers of the cleaning station 108. The traversal of the CZ may be completed at a speed that is faster or slower than the speed at which the printing assembly 150 traverses the BZ. The valves may then be opened at block 326 such that a rapid purge of binder 50 into a jet testing/purging area 109 may be accomplished. Such a process may clean the jet nozzles 158 and print heads 156, for example, in response to determining an anomaly in the dispensed binder pattern. The purging and/or cleaning operations and their parameters may be adjusted based on machine learning based on the analysis of image data from the previous layers. For example, the amount of pressure used during a purge process or the amount of binder 50 flow through nozzles 158 may be adjusted to actively improve future cleaning processes.

The electronic control unit 10 is configured to repeat the operations in block 302-322 each time a new layer of binder 50 is prescribed to be deposited in the build zone BZ according to the build instructions.

Moreover, in some embodiments, while the printing assembly 150 is undergoing a cleaning operation, optionally immediately before or after printing, a binder 50 supply (e.g. one or more local fluid manifolds 110A and 112A) to the printing assembly 150 may be refilled at block 328. Additionally, at block 330, a vacuum pressure, for example, may implemented to re-establish binder 50 circulation within the print head following a pressurized purging operation such as the purging operation described with reference to block 324 prior to further printing assembly 150 deposition activities. At block 332, the electronic control unit 10, in response to the processes at block 312 and/or block 330, may monitor the print head binder supply pressures and determine whether they are within tolerance. If they are out of tolerance, the electronic control unit 10 may implement corrective action to adjust the pressures so that binder circulation to the nozzles 158 is within the predefined tolerance.

Turning now to FIG. 4, the flow diagram 400 depicts recoat methods including closed loop control operations to improve reliability of the recoat operation. In embodiments, the electronic control unit 10 loads build instructions for the recoat assembly 140 to build a component 70, at block 402, which causes the recoat assembly 140 to configure roller(s) and/or doctor blade(s) heights and traversal speeds for the upcoming build material 40 distribution. The build instructions include predefined build material dosing parameters, which may define a build material thickness for a new layer of build material 40 and optionally an overdose amount to assure good coverage as a result of the recoat process, a recoat assembly speed for traversing the build zone, a rotation speed of the roller of the recoat assembly 140, a rotation direction of the roller of the recoat assembly 140, and/or the like. The electronic control unit 10, at block 402, may also determine whether the powder supply process, dosing, is complete. Dosing, a powder supply process, includes actuating the supply platform actuator 132 causing the supply platform 130 to move an upward direction (e.g., +Z-axis direction) so that build material 40 may be introduced to the recoat assembly 140 for distribution in the build zone BZ. Dosing occurs when the recoat assembly 140 is in the home position 153, for example, at block 402a. Furthermore, dosing occurs each time a new layer of build material 40 is to be distributed in the build zone BZ by the recoat assembly 140.

From time to time, additional powder supply processes may be executed. For example, when a powder supply sensor indicates that the level of build material 40 on the supply platform 130 is below a threshold value, the electronic control unit 10 may initiate one or more processes to replenish the build material 40 on the supply platform. In some embodiments, at block 402b, the lower build material hopper 172 may feed build material to the supply platform 130. This may be accomplished by lowering the supply platform 130 to a level such that build material 40 stored in the lower build material hopper 172 may flow onto the supply platform 130. The supply platform 130 may then be raised again so that dosing may occur. In some embodiments, a material handling system including for example the upper build material hopper 170 may be needed to replenish the lower build material hopper at block 402c so that further build material may be supplied to the supply platform 130 by the lower build material hopper 172 and dosing may occur. The frequency of the replenishment process at block 402b may occur every several layers (e.g., every 20-40 layers but further depends on the individual layer thicknesses, the size of the hopper, and the cross-sectional area of the build box). Additionally, the frequency of the replenishment process at block 402c may occur after a hundred or more layers are built (e.g., ~100-~500 layers, but further depends on the individual layer thicknesses, the capacity of the lower and upper build material hoppers 172 and 170, which may monitored with sensors to indicate to the electronic control unit 10 the current fill level of the hoppers 172 and 170, or the like). It should be understood that the supply processes at block 402b and 402c may occur at various time during the build operation, and are not required to be executed while the recoat assembly 140 is in its home position 153.

Once dosing is complete or while dosing occurs, the electronic control unit 10 may execute block 404. At block 404, the electronic control unit 10 determines that the printing assembly 150 has started or has completed its reverse direction pass over the build zone BZ, for example at block 316 and then causes the recoat assembly 140 to traverse the supply zone SZ pushing powder mounded on the supply platform 130 at block 406. For example, the recoat assembly 140 may wait for the printing assembly 150 to complete the reverse direction pass and optionally an additional delay at block 404. In some embodiments, the environmental control system 180 may cause an exhausted valve to fully or partially close so that suction may be created at the recoat assembly 140. This suction facilitates the collection of airborne build material 40 to be collected and removed from the process chamber 101. It is noted that the activities at block 406 may be synchronized with the activities at block 506 of the curing process. In some embodiments, a roller brush 143 (FIG. 1B) in the recoat assembly 140 may spin to clean the rollers 142 prior to the recoat assembly 140 traversing the build zone BZ at block 408. In some embodiments, rollers 142 may spin against the roller brush 143. In some embodiments, the roller brush 143 may move to engage with the rollers 142 so that the roller brush 143 may clean rollers 142.

In some embodiments, the recoat assembly 140 may directly follow the printing assembly 150 across the build zone BZ; however, in some instances the electronic control unit 10 may implement a delay before causing the recoat assembly 140 to traverse the build zone BZ to dispense a new layer of build material 40. At block 410, the electronic control unit 10 causes the recoat assembly 140 to traverse the build zone BZ to distribute (e.g., push) build material 40 thereon (e.g., in the reverse direction R, -X-axis direction). During the first pass (e.g., in the reverse direction) the one or more rollers 142 and/or doctor blades 141 of the recoat assembly 140 push build material across the build zone BZ. The rollers 142 may rotate at a rotation speed and/or direction, which may be the same for each roller in a multi-roller system or at different speeds and/or direction. It is noted that the activities at block 410 may be synchronized with the activities at block 506 of the curing process. Once the recoat assembly 140 reaches the end opposite side (e.g., the side opposite the SZ) of the build zone BZ, at block 412 the roller(s) and/or doctor blade(s) of the recoat assembly 140 may be lifted and moved past ("hop over") any residual mound of build material 40 from the first pass.

The electronic control unit 10, at block 414 causes the recoat assembly 140 to reverse direction and again traverse the build zone BZ (e.g., in the forward direction F) pushing any remaining build material 40 across the build zone BZ to generate a build material 40 thickness defined for the new layer. It is noted that the activities at block 414 may be synchronized with the pre-heating process at block 510 of the curing process. At block 416, the electronic control unit 10 further causes the recoat assembly 140 to traverse the supply zone SZ pushing any remaining build material 40 across back onto the build material supply platform 130 or optionally into a build material return bin located adjacent to the supply platform 130.

The electronic control unit 10 is configured to repeat the operations in block 402-416 each time a new layer of build material 40 is prescribed to be distributed in the build zone BZ according to the build instructions.

While the aforementioned blocks describe the process of distributing build material 40 in the build zone BZ with the recoat assembly 140, the electronic control unit 10 may also implement a recoat defect detection and compensation process. At block 418, the electronic control unit 10, loads the build instructions including the predefined build material dosing parameters. The electronic control 10 may facilitate the loading of the build instructions to the recoat assembly 140 at block 402 or update them based on any corrective action determined based on the results of blocks 420-424 described herein. At block 420, the electronic control unit 10 captures and receives image data from the vision system 14 of the build zone BZ prior to or during the forward direction pass and/or the reverse direction pass by the printing assembly 150 as described with reference to blocks 312 and 316, FIG. 3. The image data is analyzed by the electronic control unit 10 to determine the presence of any anomalies in the recoat (e.g., in the new layer of material distributed in the build zone BZ). Additionally, during the first pass of the recoat assembly 140 (e.g., in the reverse R direction), the electronic control unit 10 monitors one or more sensors associated with the recoat assembly 140, such as current sensors 24 configured to monitor current draws on the rollers 142, force sensors 26 associated with the doctor blades 141 and/or other sensors at block 422. The electronic control unit 10 may also monitor the one or more sensors associated with the recoat assembly 140, such as current sensors 24 configured to monitor current draws on the rollers 142, force sensors 26 associated with the doctor blades 141 and/or other sensors during the recoat assembly's 140 return pass (e.g., forward direction pass).

In response to the sensor data and/or image data received by the electronic control unit 10, the electronic control unit 10 executes an analysis of the sensor data and/or image data to determine the presence of any anomalies in the new layer of distributed build material 40 at block 422. At block 424, in response to determining the presence of an anomaly, the electronic control unit 10 implements a corrective action. Corrective actions may include adjusting the predefined build material dosing parameters, causing the recoat assembly 140 to re-distribute build material 40 on the new layer prior to a printing assembly dispensing binder 50 onto the new layer of build material 40, stopping a build process, causing the recoat assembly 140 to interface with one or more cleaning elements of the cleaning station 108, or the like.

Turning now to FIG. 5, the flow diagram 500 depicts recoat methods including closed loop control operations of the curing process to improve the speed of curing and/or pre-heating of the build material 40 and binder 50 between deposition of binder 50 and/or distribution of build material 40. As described herein above, the manufacturing apparatus 100 includes one or more energy sources 160 such as IR lamps 160 to facilitate curing processes and/or evaporation of solvent from the build material 40. In some embodiments, the one or more energy sources 160 may be coupled to the printing assembly 150 and/or the recoat assembly 140. The following method describes an embodiment where the first IR lamp 160A is coupled to the forward facing surface of the printing assembly 150 and a second IR lamp 160B is coupled to the reverse facing surface of the recoat assembly 140.

Turning to block 502, as the printing assembly 150 traverses the build zone BZ in the reverse direction (e.g., at block 316), the first IR lamp 160A applies energy at a first level and/or flow gas 161A to the build material 40 and binder 50 in the build zone BZ to facilitate a curing reaction and/or phase change. At block 504, after the printing assembly 150 has traversed the build zone BZ at block 316, the electronic control unit 10, optionally, activates a build plate heater 121 that provides heat to the build on the build plate 120 to facilitate solvent evaporation. In other embodiments, the build plate heater 121 provides heat to the build on the build plate 120 to facilitate solvent evaporation throughout the build process and is not intermittently activated and deactivated. The build plate heater 121 may actively cycle ON and OFF around a temperature set point such that the build plate 120 may maintain a predefined temperature during the build. In some instances, as the build grows in layers, the set point may increase so that the surface temperature of the build material 40 on the build plate 120 maintains a predefined temperature (e.g., within a predefined range) since the surface of the build increases in distance from the surface of the build plate 120 as the build progresses.

In some embodiments, the electronic control unit 10, at block 506, causes the environmental control system 180 to flow gas 161B through or around the IR lamp 160B to displace binder vapor with hot air and provide an additional source of energy (e.g., heat) to the build material 40 and binder 50 on the build plate 120 in order to accelerate curing processes. The IR lamp 160B may also provide IR energy to the build material 40 and binder 50 on the build plate 120 in order to accelerate curing processes at block 506. It should be understood that the IR lamps 160A, 160B, and 160C and the flow gas 161A, 161B, and 161C may introduce heat for curing or pre-heating the build material 40 and binder 50 at various times during the build. Moreover, the flow gas 161B through or around the IR lamp 160B can cool the lamp increasing the lamps lifecycle. Additionally, at block 508, as the recoat assembly 140 traverses the build zone BZ in the reverse direction R (e.g., at block 410), the second IR lamp 160B applies energy at a first level to the build material 40 and binder 50 in the build zone to facilitate a curing reaction and/or phase change. Similarly, as the recoat assembly 140 traverses the build zone BZ in the forward direction F (e.g., during a return pass to the supply zone SZ, at block 414), the second IR lamp 160B applies energy at a second level to the build material 40 and binder 50 in the build zone to pre-heat the build material 40 at block 510. While a flow gas 161B is discussed with reference to the operation of IR lamp 160B, it is understood that each energy source (e.g., each IR lamp 160A, 160B or 160C) may include a flow gas 161A, 161B, and 161C (FIG. 1B) through or around the IR lamps 160A, 160B or 160C (FIG. 1B).

The electronic control unit 10 is configured to repeat the operations in block 502-510 each time a new layer of build material 40 is prescribed to be distributed in the build zone BZ according to the build instructions.

While the aforementioned blocks describe the process of implementing curing mechanisms such as IR lamps 160, flow gas 161 (e.g., a heated gas flow generated by heat from the IR lamps 160), and build plate heaters 121, the electronic control unit 10 may also implement a closed loop control system to assure the one or more energy sources 160 are providing the necessary heating to facilitate curing processes, phase changes, and/or solvent evaporation.

In some embodiments, the electronic control unit 10, at block 512, loads build instructions for a build that includes predefined IR lamp 160 energy levels, flow gas 161 rates, and/or process gas temperatures (e.g., the average environment temperature within the process chamber 101) and surface temperature ranges (e.g., surface temperature of the build material 40 on the build plate 120, optionally monitored using a pyrometer). At block 514, during the jet/recoat delay (e.g., at block 404) or as a continuous operation during the build, the electronic control unit 10 monitors sensor data from the one or more sensors. For example, the electronic control unit 10 may receive surface temperatures of the build material 40 in the build zone BZ using a pyrometer and/or a process gas temperature within the process chamber 101. At block 516, during the recoat assembly's 140 first pass and return pass over the build zone, (e.g., at blocks 410 and 414), the electronic control unit 10 monitors the flow gas 161 temperature and/or the surface temperature of the build material 40 on the build plate 120. The electronic control unit 10 analyzes the sensor data to determine whether the flow gas 161 temperature (e.g., which may be a function of the IR lamp intensity and the flow gas 161 rate) and the surface temperature are within the predefined temperature ranges defined at block 518. In response to the determining that that a temperature value is not within the predefined range, the electronic control unit 10 may adjust the intensity of the one or more IR lamps 160, a flow gas 161 rate, the ON/OFF cycle time of the build plate heater 121 and/or the delivery of heated process gas from the environmental system to increase or decrease the temperature.

Turning now to FIG. 6, the flow diagram 600 depicts environmental control system methods including closed loop control operations to improve reliability of the recoat operation (e.g., by controlling humidity levels within the process chamber 101) and to provide better control for curing processes. The environmental control system 180 as described herein includes a plurality of subsystems to control the environment within the process chamber 101. Depending on the type of component 70 and materials being used within the process chamber 101, various environmental conditions need to be satisfied to deliver a reliable component 70. The one or more subsystems may include a heat exchanger 181, a dehumidifier or condenser 182 or other means of removing vapor from the process gas, a process gas supply 183, an air filtration system 184 and/or the like. Each of the subsystems may include one or more controllable valves that the electronic control unit 10 may electronically activate or deactivate such that the valve may be opened or closed or such that the subsystem is connected or disconnected from the process chamber 101.

At block 602, the electronic control unit 10 loads a predefined set of environmental conditions for environmental controls within the process chamber 101 from the build instructions. The predefined set of environmental conditions may include predefined temperatures, relative humidity levels, solvent concentration levels, an acceptable concentration of airborne build material 40, and gas concentration levels within the process chamber 101.

The electronic control unit 10 loads the predefined set of environmental conditions in the environmental control system 180 at block 604. Once the predefined set of environmental conditions is loaded into the environmental control system 180, the environmental control system 180 may condition the process chamber 101 according to the predefined conditions. In some embodiments, during a build, the electronic control unit 10, at block 606, may partially or fully close an exhaust valve to the process chamber 101 to generate suction within the process chamber 101 around the recoat assembly 140 to extract airborne build material 40 while the recoat assembly 140 distributes a new layer of build material 40. It is noted that the activities at block 606 may be synchronized with the activities at block 404 of the recoat process. At block 608, the electronic control unit 10 causes heated process gas to flow within the process chamber 101. The heated (or chilled) process gas within the process chamber 101 may further be controlled to maintain a predefined average temperature and/or humidity within the process chamber 101. In some embodiments, environmental control processes disclosed herein may occur in parallel or in series with each other. It is noted that the activities at block 608 may be synchronized with the activities at block 506 of the recoat process.

At block 610, during the first pass of the recoat assembly 140, the electronic control unit 10 maintains the exhaust valve in a partially or fully closed state to maintain suction within the process chamber 101 around the recoat assembly 140 so that airborne build material 40 is extracted and filtered out using the filtration system. The activities at block 610 may be synchronized with the activities at block 406 of the recoat process. The suction level and heated gas flow may be adjusted, at block 612, as the recoat assembly 140 completes a return pass across the build zone BZ to the supply zone SZ. Once complete, the heated gas flow valve may be shut off and the process chamber 101 exhaust valve may be opened by the electronic control unit 10 at block 614. Furthermore, as the printing assembly 150 completes passes over the build zone BZ, gas flows are adjusted through controls at block 616. The activities at block 616 may be synchronized with the activities at blocks 312 and 316 of the printing process.

As the build process is carried out the electronic control unit 10 receives sensor data related to the environment of the of process chamber 101. In addition to providing control signals and/or environment conditions to the environmental control system 180, the electronic control unit 10 also monitors sensor data and generates commands to correct environment conditions that are not within the predefined ranges defined by the building instructions. For example, at block 618, the electronic control unit 10 may receive one or more sets of data from the one or more sensors. The data may include sensor data that indicates the process chamber 101 temperature, the relative humidity within the process chamber 101, the concentration of process gas within the process chamber 101, the concentration of airborne build material 40 and/or other conditions within the process chamber 101.

At block 620, the electronic control unit 10 may implement one or more corrective actions to adjust the environment condition that is determined to not be within a predefined set of environmental conditions. For example, the electronic control unit 10 causes the environmental control system 180 to activate flow from a heat exchanger of the environmental control system 180, when the sensor data indicates that the process chamber 101 temperature is below the predefined set of environmental conditions, and causes the environmental control system 180 to deactivate flow from the heat exchanger of the environmental control system 180, when the sensor data indicates that the process chamber temperature is above the predefined set of environmental conditions. In some embodiments, the electronic control unit 10 causes the environmental control system 180 to activate a cooling flow through the process chamber 101 to remove excess heat therein.

In some embodiments, the electronic control unit 10 causes the environmental control system 180 to activate flow from a dehumidifier of the environmental control system 180, when the sensor data indicates that the relative humidity is above the predefined set of environmental conditions, and cause the environmental control system 180 to deactivate flow from the dehumidifier of the environmental control system 180, when the sensor data indicates that the relative humidity is below the predefined set of environmental conditions. The electronic control unit 10 causes the environmental control system 180 to activate flow from a process gas supply of the environmental control system 180, when the sensor data indicates that the process gas concentration is below the predefined set of environmental conditions, and causes the environmental control system 180 to deactivate flow from the process gas supply of the environmental control system 180, when the sensor data indicates that the process gas concentration is above the predefined set of environmental conditions.

Similarly, the electronic control unit 10 causes the environmental control system 180 to activate flow from a condenser 182 of the environmental control system 180, when the sensor data indicates that the solvent concentration is outside a predefined set of environmental conditions, and causes the environmental control system 180 to deactivate flow from the condenser 182 of the environmental control system 180, when the sensor data indicates that the solvent concentration is within the predefined set of environmental conditions. In some embodiments, the electronic control unit 10 cause the environmental control system 180 to activate an air filtration system of the environmental control system 180, when the sensor data indicates that the concentration of airborne build material 40 is above the predefined set of environmental conditions, and cause the environmental control system 180 to deactivate flow from the air filtration system of the environmental control system 180, when the sensor data indicates that the concentration of airborne build material 40 is below the predefined set of environmental conditions.

In some further embodiments, build instructions may require that the environment within the process chamber 101 be an inert environment or at least be maintained as an inert environment during specified build process. Accordingly, the electronic control unit 10 may cause the environmental control system 180 to generate and/or maintain an inert environment within the process chamber 101 at block 622. The electronic control unit 10 may monitor one or more O₂ sensors configured to monitor oxygen levels within the process chamber 101 to generate and/or maintain an inert environment with in the process chamber 101.

It should be understood that steps of the aforementioned process may be omitted or performed in a variety of orders while still achieving the object of the present disclosure. The functional blocks and/or flowchart elements described herein may be translated onto machine-readable instructions. As non-limiting examples, the machine-readable instructions may be written using any programming protocol, such as: descriptive text to be parsed (e.g., such as hypertext markup language, extensible markup language, etc.), (ii) assembly language, (iii) object code generated from source code by a compiler, (iv) source code written using syntax from any suitable programming language for execution by an interpreter, (v) source code for compilation and execution by a just-in-time compiler, etc. Alternatively, the machine-readable instructions may be written in a hardware description language (HDL), such as logic implemented via either a field programmable gate array (FPGA) configuration or an application-specific integrated circuit (ASIC), or their equivalents. Accordingly, the functionality described herein may be implemented in any conventional computer programming language, as pre-programmed hardware elements, or as a combination of hardware and software components.

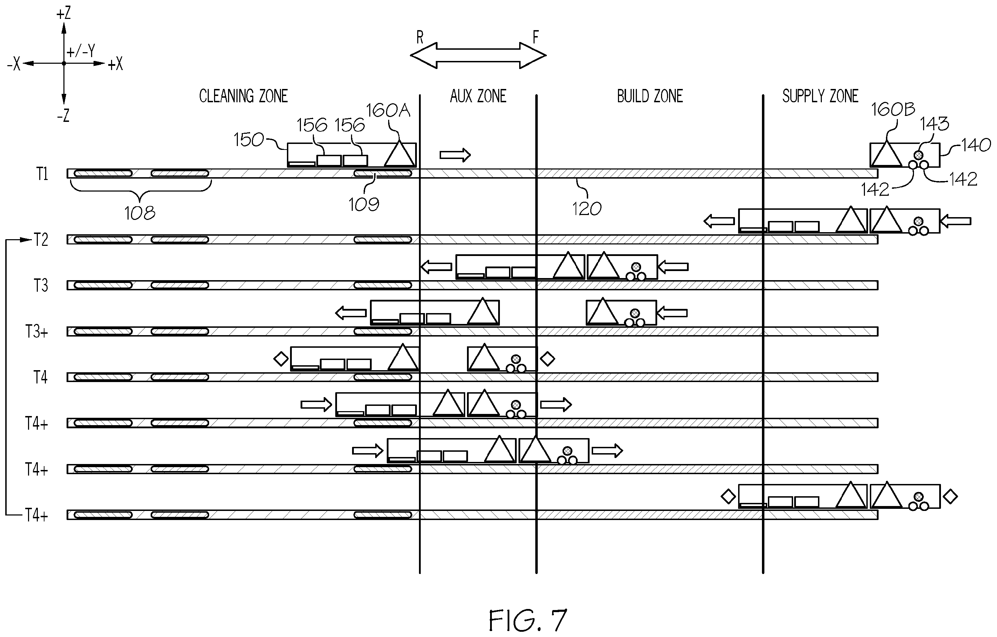

Turning now to FIG. 7, an illustrative schematic of the motion of the printing assembly 150 and recoat assembly 140 during the build process is depicted. As described herein, the additive manufacturing apparatus 100 includes a process chamber 101 having a length defined by at least a cleaning zone CZ, a build zone BZ, and a supply zone BZ sequentially positioned at discrete portions along the length of the process chamber 101. In some embodiments, there may be an additional zone, herein referred to an auxiliary zone (aux. zone or AZ). The AZ may include build material 40 overflow bins, or other elements such as a binder deposition testing area. However, an AZ is not necessarily included in the additive manufacturing apparatus 100. The additive manufacturing apparatus 100 also includes a support extending along the length of the process chamber 101 in a first vertical plane, a printing assembly 150, a recoat assembly 140, vision system 14, and an electronic control unit 10. The printing assembly 150 includes a plurality of nozzles 158 for dispensing binder 50 within the build zone. The printing assembly 150 is movably coupled to the support via a first actuator configured to move in a forward and reverse direction along a length of the support and positioned in a second vertical plane parallel to the first vertical plane. The recoat assembly 140 may include one or more doctor blades 141 or rollers 142 for distributing build material 40 within the build zone. The recoat assembly 140 is movably coupled to the support via a second actuator configured to move in a forward and reverse direction along a length of the support and positioned in the second vertical plane parallel to the first vertical plane. Additionally, the vision system 14 is configured to image a build zone.

The following build process is described with reference to time intervals T1, T2, T3, and T4. The time intervals depicted with a plus "+" symbol are intended to illustrate further motion within the build process during the defined time interval. The electronic control unit 10 is communicatively coupled to the printing assembly 150, the recoat assembly 140, the first and second actuator, the one or more energy sources 160, and the vision system 14 and other elements of the additive manufacturing apparatus 100 as described herein. The electronic control unit 10 is configured to cause the printing assembly 150 to traverse the build zone in the forward direction F (e.g., towards the supply zone) while dispensing binder 50 according to a programmed deposition pattern during a first interval, T1. In some instances, the electronic control unit 10 receives image data from the vision system 14 of a dispensed binder pattern, either as the printing assembly 150 to traverses the build zone in the forward direction F during the first time interval, T1, or once the printing assembly 150 completes a traversal of the build zone in the forward direction F. The image data and other sensor data may be logged and stored in the memory of the electronic control unit 10 or other storage device for post-mortem analysis or analysis during a subsequent build process step in order to adjust and improve the speed and/or quality of the build. During the second interval, T2, following the first interval, T1, the electronic control unit 10 causes the printing assembly 150 to traverse the build zone from in the reverse direction (e.g., away from the supply zone) while dispensing binder 50 according to the programmed deposition pattern during the second interval, T2. During a second interval, T2, following the first interval, T1, the electronic control unit 10 receives image data from the vision system 14 of a dispensed binder pattern. In some embodiments, for example, in embodiments where the vision system 14 is configured to move with the printing assembly 150 or is coupled thereto, the image data of the dispensed binder pattern may be captured during the first time interval, T1, as the printing assembly 150 traverses the build zone in the forward direction F. In other instances, the vision system 14 may capture image data of the dispensed binder pattern once the printing assembly 150 completes traversal of the build zone. For example, image data may be captured once the printing assembly 150 is clear of the field of view of the vision system 14 to the build zone.

During the second interval, T2, and third interval, T3, the electronic control unit 10 causes the recoat assembly 140 to traverse the build zone in the reverse direction (e.g., away from the supply zone) distributing build material 40 supplied in the supply zone to form a new layer of build material 40 in the build zone according to predefined build material dosing parameters. The recoat assembly 140 follows the printing assembly 150 across the build zone. As the recoat assembly 140 traverses the build zone, the electronic control unit 10 may analyze the image data to determine whether there is an anomaly in the dispensed binder pattern.

During the third interval, T3, the electronic control unit 10 may cause the printing assembly 150 to execute at least one of a purge process or a wipe process while traversing the cleaning zone in a forward and/or reverse direction. The printing assembly 150 may execute one or more cleaning operations within the cleaning zone CZ as the recoat assembly 140 completes a reverse direction pass of the build zone BZ, for example during a later portion of the third interval, T3+. In some embodiments, the printing assembly 150 maintenance as described may be performed based on the results of analysis of the image data of the dispensed binder pattern. For example, printing assembly 150 maintenance such as a cleaning operation may be performed when an anomaly is determined in the dispensed binder pattern. In some embodiments, jetting redundancy or latitudinal indexing of the print heads within the printing assembly 150 may be implemented in response to determining the presence of an anomaly (e.g., through image data analysis) in the dispensed binder pattern. For example, analysis of the image data may indicate that one or more jet nozzles 158 of the one or more print heads failed to properly dispense binder 50 during traversal and dispensing of binder 50 over the previous layer of build material 40.

During the fourth interval, T4, the electronic control unit 10 causes the recoat assembly 140 to traverse the build zone in the forward direction (e.g., toward the supply zone) and the printing assembly 150 to traverse the build zone in the forward direction (towards the supply zone) following the recoat assembly 140 across the build zone while dispensing binder 50 according to a programmed deposition pattern on the new layer of build material 40.

In some embodiments, the electronic control unit 10 is further configured to adjust the jet nozzle mapping for a subsequent traversal of the printing assembly 150 over the build zone, in response to determining the presence of the anomaly in the dispensed binder pattern. The electronic control unit 10 is further configured to implement a corrective action for a subsequent distribution of build material 40 by the recoat assembly 140, in response to determining the presence of an anomaly in the new layer of distributed build material 40. In some embodiments, the electronic control unit 10 causes the printing assembly 150 to execute subpixel indexing of the plurality of nozzles 158 between the first and second intervals, T1 and T2. Moreover, in some embodiments, the electronic control unit 10 causes the printing assembly 150 to execute subpixel indexing of the plurality of nozzles 158 between the third and fourth intervals, T3 and T4. In some embodiments, a delay may be implemented before the recoat assembly 140 begins to traverse the build zone in the reverse direction following the printing assembly 150 across the build zone during the second and third intervals, T2 and T3. The delay may be implemented to allow the binder 50 to soak into the build material 40, the build plate 120 to be incremented down in the -Z direction, the printing assembly 150 to clear the build zone, and/or the like.

Referring to the motion of the printing assembly 150, the printing assembly 150 traverses the build zone in the forward and reverse directions at a first speed. In some embodiments, the printing assembly 150 traverses the cleaning zone in a forward and reverse direction at a second speed, the second speed is slower than the first speed.

Based on the foregoing, it should be understood that embodiments of an additive manufacturing apparatus are described herein. The additive manufacturing apparatus may include a process chamber 101 defining a volume having a height, length, and width. The length defines multiple processing zones. The processing chamber includes a cleaning zone, a build zone, and a supply zone sequentially positioned at discrete portions along the length of the process chamber 101. The process chamber 101 includes an actuator assembly for distributing build material and depositing binder material in an additive manufacturing apparatus. The actuator assembly may generally include a support extending along the length of the process chamber 101 in a first vertical plane. The actuator assembly may further include a recoat assembly 140 for distributing build material and a printing assembly 150 for depositing binder material. A printing assembly 150 includes a plurality of nozzles 158 for dispensing binder 50 within the build zone. The printing assembly 150 is movably coupled to the support via a first actuator configured to move in a forward and reverse direction along a length of the support. The print head actuator may comprise a print motion axis, where the print head actuator is bi-directionally actuatable along the print motion axis thereby effecting bi-directional movement of the print head. The printing assembly 150 is positioned in a second vertical plane parallel to the first vertical plane.

Moreover, embodiments described herein more specifically disclose systems and methods for operating the printing assembly 150, the recoat assembly 140, the curing system, the environmental control system 180 and the interactions thereof to improve reliability and speed of a build process. To improve reliability and speed of the build process, the manufacturing apparatuses disclosed herein further implement one or more sensors and control systems configured to operate in closed loop control loops.

It will be apparent to those skilled in the art that various modifications and variations can be made to the embodiments described herein without departing from the scope of the claimed subject matter.

## Claims

1. An additive manufacturing apparatus (100), comprising:
a process chamber (101) having a length defined by at least a cleaning zone, a build zone, and a supply zone sequentially positioned at discrete portions along the length of the process chamber;
a support (104) extending along the length of the process chamber (101) in a first vertical plane;
a printing assembly (150) movably coupled to the support (104) via a first actuator configured to move in a forward and reverse direction along a length of the support (104), and positioned in a second vertical plane parallel to the first vertical plane;
a recoat assembly (140) movably coupled to the support (104) via a second actuator configured to move in a forward and reverse direction along a length of the support (104), and positioned in the second vertical plane parallel to the first vertical plane;
one or more IR lamps (160) configured to apply energy to build material and binder in the build zone to stimulate a curing reaction, the one or more IR lamps (160) are coupled to at least one of the printing assembly (150) or the recoat assembly (140);
one or more temperature sensors (21) configured to monitor at least one of a gas temperature in the process chamber (101) or a build material surface temperature; and
an electronic control unit (10) communicatively coupled to the printing assembly (150), the first actuator, the recoat assembly (140), the second actuator, the one or more IR lamps (160), and the one or more temperature sensors (21), the electronic control unit (10) is configured to:
cause the one or more IR lamps (160) to emit energy as the printing assembly (150) or the recoat assembly (140) traverse the build zone,
receive a temperature value from the one or more temperature sensors (21),
determine whether the temperature value is within a predefined range,
in response to the determining that that the temperature value is not within the predefined range, adjust the intensity of the one or more IR lamps (160) or a flow gas rate around the one or more IR lamps (160).

2. The apparatus of claim 1, wherein when the temperature value is determined to be below the predefined range, the intensity of the one or more IR lamps (160) is increased.

3. The apparatus of claim 1, wherein when the temperature value is determined to be above the predefined range, the intensity of the one or more IR lamps (160) is decreased.

4. The apparatus of claim 1, wherein a first IR lamp (160) of the one or more IR lamps (160) is coupled to the printing assembly (150) and a second IR lamp (160) of the one or more IR lamps (160) is coupled to the recoat assembly (140).

5. The apparatus of claim 1, wherein the electronic control unit (10) controls a flow gas rate around the one or more IR lamps (160).

6. The apparatus of claim 5, wherein the one or more temperature sensors is a gas temperature sensor and the electronic control unit (10) is further configured to:
in response to the determining that that a surface temperature value of the build material is not within the predefined range, adjust the flow gas rate of gas around the one or more IR lamps (160).

7. The apparatus of claim 6, wherein when the surface temperature value is determined to be below the predefined range, the flow gas rates around the one or more IR lamps (160) is increased.

8. The apparatus of claim 6, wherein when the surface temperature value is determined to be above the predefined range, the flow gas rates around the one or more IR lamps (160) is decreased.

9. The apparatus of claim 1, further comprising an environmental control system fluidly coupled to the process chamber, wherein the environmental control system delivers heated gas to the process chamber in response to determining that a process chamber temperature value is not within a predefined process chamber range.

10. The apparatus of claim 1, further comprising a build plate heater thermally coupled to a build platform in the build zone, wherein when the temperature value of the surface temperature of the build material surface is determined to be below the predefined range, the electronic control unit (10) causes the build plate heater to increase the amount of energy delivered to the build plate and the build material in the build zone.

## Patentansprüche

1. Vorrichtung (100) zur additiven Fertigung, umfassend:
eine Prozesskammer (101), die eine Länge aufweist, die durch wenigstens eine Reinigungszone, eine Bauzone und eine Zuführzone definiert ist, die nacheinander an diskreten Abschnitten entlang der Länge der Prozesskammer positioniert sind;
einen Träger (104), der sich entlang der Länge der Prozesskammer (101) in einer ersten vertikalen Ebene erstreckt;
eine Druckbaugruppe (150), die über einen ersten Aktuator, der dazu konfiguriert ist, sich in einer Vorwärts- und einer Rückwärtsrichtung entlang einer Länge des Trägers (104) zu bewegen, beweglich mit dem Träger (104) gekoppelt und in einer zweiten vertikalen Ebene parallel zu der ersten vertikalen Ebene positioniert ist;
eine Wiederbeschichtungsbaugruppe (140), die über einen zweiten Aktuator, der dazu konfiguriert ist, sich in einer Vorwärts- und einer Rückwärtsrichtung entlang einer Länge des Trägers (104) zu bewegen, beweglich mit dem Träger (104) gekoppelt und in der zweiten vertikalen Ebene parallel zu der ersten vertikalen Ebene positioniert ist;
eine oder mehrere IR-Lampen (160), die dazu konfiguriert sind, Energie auf Baumaterial und Bindemittel in der Bauzone anzuwenden, um eine Aushärtungsreaktion anzuregen, wobei die eine oder die mehreren IR-Lampen (160) mit wenigstens einer von der Druckbaugruppe (150) oder der Wiederbeschichtungsbaugruppe (140) gekoppelt sind;
einen oder mehrere Temperatursensoren (21), die dazu konfiguriert sind, wenigstens eines von einer Gastemperatur in der Prozesskammer (101) oder einer Oberflächentemperatur des Baumaterials zu überwachen; und
eine elektronische Steuereinheit (10), die kommunikativ mit der Druckbaugruppe (150), dem ersten Aktuator, der Wiederbeschichtungsbaugruppe (140), dem zweiten Aktuator, der einen oder den mehreren IR-Lampen (160) und dem einen oder den mehreren Temperatursensoren (21) gekoppelt ist, wobei die elektronische Steuereinheit (10) dazu konfiguriert ist:
die eine oder die mehreren IR-Lampen (160) zu veranlassen, Energie zu emittieren, während die Druckbaugruppe (150) oder die Wiederbeschichtungsbaugruppe (140) die Bauzone durchläuft;
einen Temperaturwert von dem einen oder den mehreren Temperatursensoren (21) zu empfangen;
zu bestimmen, ob der Temperaturwert innerhalb eines vordefinierten Bereichs liegt;
als Reaktion auf das Bestimmen, dass der Temperaturwert nicht innerhalb des vordefinierten Bereichs liegt, die Intensität der einen oder der mehreren IR-Lampen (160) oder eine Gasdurchflussrate um die eine oder die mehreren IR-Lampen (160) herum anzupassen.

2. Vorrichtung nach Anspruch 1, wobei, wenn bestimmt wird, dass der Temperaturwert unterhalb des vordefinierten Bereichs liegt, die Intensität der einen oder der mehreren IR-Lampen (160) erhöht wird.

3. Vorrichtung nach Anspruch 1, wobei, wenn bestimmt wird, dass der Temperaturwert oberhalb des vordefinierten Bereichs liegt, die Intensität der einen oder der mehreren IR-Lampen (160) verringert wird.

4. Vorrichtung nach Anspruch 1, wobei eine erste IR-Lampe (160) der einen oder der mehreren IR-Lampen (160) mit der Druckbaugruppe (150) gekoppelt ist und eine zweite IR-Lampe (160) der einen oder der mehreren IR-Lampen (160) mit der Wiederbeschichtungsbaugruppe (140) gekoppelt ist.

5. Vorrichtung nach Anspruch 1, wobei die elektronische Steuereinheit (10) eine Gasdurchflussrate um die eine oder die mehreren IR-Lampen (160) herum steuert.

6. Vorrichtung nach Anspruch 5, wobei der eine oder die mehreren Temperatursensoren ein Gastemperatursensor sind und die elektronische Steuereinheit (10) ferner dazu konfiguriert ist:
als Reaktion auf das Bestimmen, dass ein Oberflächentemperaturwert des Baumaterials nicht innerhalb des vordefinierten Bereichs liegt, die Durchflussrate von Gas um die eine oder die mehreren IR-Lampen (160) herum anzupassen.

7. Vorrichtung nach Anspruch 6, wobei, wenn bestimmt wird, dass der Oberflächentemperaturwert unterhalb des vordefinierten Bereichs liegt, die Gasdurchflussraten um die eine oder die mehreren IR-Lampen (160) herum erhöht werden.

8. Vorrichtung nach Anspruch 6, wobei, wenn bestimmt wird, dass der Oberflächentemperaturwert oberhalb des vordefinierten Bereichs liegt, die Gasdurchflussraten um die eine oder die mehreren IR-Lampen (160) herum verringert werden.

9. Vorrichtung nach Anspruch 1, ferner umfassend ein Umgebungssteuersystem, das fluidisch mit der Prozesskammer gekoppelt ist, wobei das Umgebungssteuersystem als Reaktion auf das Bestimmen, dass ein Prozesskammertemperaturwert nicht innerhalb eines vordefinierten Prozesskammerbereichs liegt, der Prozesskammer erwärmtes Gas zuführt.

10. Vorrichtung nach Anspruch 1, ferner umfassend eine Bauplattenheizung, die thermisch mit einer Bauplattform in der Bauzone gekoppelt ist, wobei, wenn bestimmt wird, dass der Temperaturwert der Oberflächentemperatur der Baumaterialoberfläche unterhalb des vordefinierten Bereichs liegt, die elektronische Steuereinheit (10) die Bauplattenheizung veranlasst, die Energiemenge zu erhöhen, die der Bauplatte und dem Baumaterial in der Bauzone zugeführt wird.

## Revendications

1. Appareil de fabrication additive (100), comprenant :
une chambre de traitement (101) ayant une longueur définie par au moins une zone de nettoyage, une zone de fabrication et une zone d'alimentation positionnées séquentiellement au niveau de portions distinctes le long de la longueur de la chambre de traitement ;
un support (104) s'étendant le long de la longueur de la chambre de traitement (101) dans un premier plan vertical ;
un ensemble d'impression (150) couplé de manière mobile au support (104) par l'intermédiaire d'un premier actionneur configuré pour se déplacer dans un sens aller et un sens retour le long d'une longueur du support (104), et positionné dans un second plan vertical parallèle au premier plan vertical ;
un ensemble de réenduction (140) couplé de manière mobile au support (104) par l'intermédiaire d'un second actionneur configuré pour se déplacer dans un sens aller et un sens retour le long d'une longueur du support (104), et positionné dans le second plan vertical parallèle au premier plan vertical ;
une ou plusieurs lampes IR (160) configurées pour appliquer de l'énergie à un matériau de fabrication et à un liant dans la zone de fabrication afin de stimuler une réaction de durcissement, la ou les lampes IR (160) étant couplées à au moins l'un de l'ensemble d'impression (150) ou de l'ensemble de réenduction (140) ;
un ou plusieurs capteurs de température (21) configurés pour surveiller au moins l'une d'une température de gaz dans la chambre de traitement (101) ou d'une température de surface du matériau de fabrication ; et
une unité de commande électronique (10) couplée en communication à l'ensemble d'impression (150), au premier actionneur, à l'ensemble de réenduction (140), au second actionneur, à la ou aux lampes IR (160) et au ou aux capteurs de température (21), l'unité de commande électronique (10) étant configurée pour :
amener la ou les lampes IR (160) à émettre de l'énergie lorsque l'ensemble d'impression (150) ou l'ensemble de réenduction (140) traverse la zone de fabrication ;
recevoir une valeur de température en provenance du ou des capteurs de température (21) ;
déterminer si la valeur de température se situe dans une plage prédéfinie ;
en réponse à la détermination que la valeur de température ne se situe pas dans la plage prédéfinie, ajuster l'intensité de la ou des lampes IR (160) ou un débit de gaz autour de la ou des lampes IR (160).

2. Appareil selon la revendication 1, dans lequel, lorsqu'il est déterminé que la valeur de température est inférieure à la plage prédéfinie, l'intensité de la ou des lampes IR (160) est augmentée.

3. Appareil selon la revendication 1, dans lequel, lorsqu'il est déterminé que la valeur de température est supérieure à la plage prédéfinie, l'intensité de la ou des lampes IR (160) est diminuée.

4. Appareil selon la revendication 1, dans lequel une première lampe IR (160) de la ou des lampes IR (160) est couplée à l'ensemble d'impression (150) et une seconde lampe IR (160) de la ou des lampes IR (160) est couplée à l'ensemble de réenduction (140).

5. Appareil selon la revendication 1, dans lequel l'unité de commande électronique (10) commande un débit de gaz autour de la ou des lampes IR (160).

6. Appareil selon la revendication 5, dans lequel le ou les capteurs de température sont un capteur de température de gaz et l'unité de commande électronique (10) est en outre configurée pour :
en réponse à la détermination qu'une valeur de température de surface du matériau de fabrication ne se situe pas dans la plage prédéfinie, ajuster le débit de gaz autour de la ou des lampes IR (160).

7. Appareil selon la revendication 6, dans lequel, lorsqu'il est déterminé que la valeur de température de surface est inférieure à la plage prédéfinie, les débits de gaz autour de la ou des lampes IR (160) sont augmentés.

8. Appareil selon la revendication 6, dans lequel, lorsqu'il est déterminé que la valeur de température de surface est supérieure à la plage prédéfinie, les débits de gaz autour de la ou des lampes IR (160) sont diminués.

9. Appareil selon la revendication 1, comprenant en outre un système de régulation d'environnement couplé fluidiquement à la chambre de traitement, dans lequel le système de régulation d'environnement fournit du gaz chauffé à la chambre de traitement en réponse à la détermination qu'une valeur de température de chambre de traitement ne se situe pas dans une plage prédéfinie de chambre de traitement.

10. Appareil selon la revendication 1, comprenant en outre un dispositif de chauffage de plaque de fabrication couplé thermiquement à une plateforme de fabrication dans la zone de fabrication, dans lequel, lorsqu'il est déterminé que la valeur de température de la température de surface de la surface du matériau de fabrication est inférieure à la plage prédéfinie, l'unité de commande électronique (10) amène le dispositif de chauffage de plaque de fabrication à augmenter la quantité d'énergie fournie à la plaque de fabrication et au matériau de fabrication dans la zone de fabrication.
